# EUROPEAN PATENT SPECIFICATION

(11) **EP 4 737 114 B1**
(45) Date of publication and mention of the grant of the patent: **19.08.2026**
(21) Application number: 24210377.8
(22) Date of filing: 01.11.2024
(51) Int. Cl.: B32B 5/30, B32B 3/26, B32B 5/02, B32B 5/12, B32B 5/16, B32B 5/18, B32B 9/04, B32B 27/06

(54) **A NOISE ABSORBER SOUND BARRIER AND ITS PRODUCTION METHOD**
LÄRM ABSORBIERENDE SCHALLBARRIRERE UND VERFAHREN ZU IHRER HERSTELLUNG
BARRIÈRE ACOUSTIQUE ABSORBANT LE BRUIT ET SON PROCÉDÉ DE PRODUCTION

(43) Date of publication of application: 06.05.2026
(73) Proprietor: Hatko Kaucuk Anonim Sirketi, 31218 Hatay (TR)
(72) Inventor: HATKO, Nejan, 34381 Istanbul (TR)
(74) Representative: Sevinç, Cenk

(56) References cited:
- EP-A1- 4 310 253
- AU-A1- 2023 203 836

## Description

### Technical Field of the Invention

The present invention relates to a sound barrier (such as noise wall, sound wall) capable of high sound insulation and absorption. Due to its sound insulation and absorption capability, the barrier can be used in any area where noise pollution is present. The barrier contains both recycled waste carbon fiber mesh and end-of-life tires (ELT), which lowers its carbon footprint of the sound barrier.

### State of the Prior Art

Pollution is an ever-growing threat of today's world. It is occurring in every single part of the world with several different types, such as noise, water, and light pollution. Noise pollution, like many other pollution types had increased, considerably over the last century and it is continuing to increase with each-coming year. Noise pollution (or sound pollution) mostly occurs in the big cities, around roads, railways, airports, entertainment venues, construction sites or industrial facilities. People who work or live arounds these places are subjected to a considerably high amount of noise pollution. This pollution negatively effects people physically and psychologically. Studies shows that noise pollutions can lead to high blood pressure, tinnitus and hearing loss. As psychological outcome of the noise pollution, stress, anxiety, sleep deprivation and aggression are commonly experienced. Moreover, it has been reported that animals and plants that are subjected to noise pollution over a certain amount of time, experience similar physical and psychological problems as well.

The increase in the noise pollution, lead governments and private corporations to look for ways to decrease this pollution. To this end, over the years, silent engines etc. have been manufactured; however, noise primarily originates from the contact between tires and the surface of the road when vehicles exceed the speed of 30 km/h. Hence, people who are residing around highways and railways, are still subjected to noise pollution. For that matter constructional structures that prevents the pollutant noises to reach to the residences are being used. These structures can be listed as (but not restricted to) barriers, sound tubes, insulation glasses and so on. Among these structures the sound barriers are the most commonly used one since, they can be produced in desired sizes and shapes. However, they still fall short in certain aspects due to their reflective surface.

In the prior art, EP22188805.0 patent application explains a sound barrier. This barrier contains styrene butadiene rubber (SBR), which is recycled from end-of-life tires. This decreases the carbon footprint of the barrier. While the barrier provides high insulation of noise, it fails to absorb it. This means that the noise is not removed from the environment but actually trapped between the source and the barrier. Although, this somewhat protects the people in the domestic areas, the people who is working or stationed near the sources (for example drivers) are still exposed to noise pollution. Hence, this sound barrier is not quite effective to be used as a precaution against noise pollution due to its low-to-no sound absorption. During the application to very large areas, due to the high reflective power of the sound barrier, the reflected sound will not have a significant impact on the area. However, as the application areas move into more urban areas, the reflected sound from the sound barrier may cause harm to other areas (for example, increasing the noise heard by houses on the opposite side of the road). Therefore, it is necessary to use not only a barrier with strong insulation but also one with sound absorption properties.

The patent application AU2023203836A1 explains a sound barrier as well and has the same priority with EP22188805.0. While this sound barrier explained in AU2023203836A1 can provide some degree of protection for people living in nearby areas, those working close to the noise sources remain vulnerable to noise pollution. As a result, its effectiveness as a noise-reduction measure is limited, particularly due to its lack of sound absorption. In large open areas, the barrier's high reflective properties prevent the reflected noise from significantly affecting the environment. However, when implemented in urban areas, the sound reflected from the barrier may negatively impact other regions, such as increasing the noise levels experienced by homes on the opposite side of the street.

The CN210216199U utility model application explains a composite sound absorption panel. The panel in question contains several layers; an aluminum foam layer, a first plastic material layer, a honeycomb aluminum layer, a second plastic material layer, and an ordinary aluminum layer. The panel claims to offer effective sound absorption; however, the use of foam aluminum material here increases the production cost and need for periodical checking, makes the production process quite complex and causes environmental pollution with high carbon footprint due the choice of materials used in the production.

In the prior art, there are problems such as the barriers/panels offering low sound absorption and insulation, high-cost production, the need for periodical checks, usage of pollutant materials, complicated production methods, which made it necessary to make developments in this technical field.

### Brief Description and the Aims of the Invention

The present invention is related to a sound barrier that is capable of high sound insulation and absorption, with low carbon footprint. The sound barrier contains recycled granule rubber, binder, catalyst, fire-retardant, waste carbon fiber mesh, absorbent low-density polyethylene (LDPE) foam and synthetic grass. The color of the sound barrier, LDPE foam and the synthetic grass can be changed based on preference; and logos etc. can be applied to the synthetic grass layer as well.

The invention aims to provide a sound barrier with high sound absorption capability, in addition to high insulation ability. In the present invention, the sound barrier contains waste carbon fiber mesh, which gives the barrier the ability to endure harsh conditions such as wind. In addition, LDPE foam that is used in the sound barrier also provides sound absorption and insulation ability. Moreover, the present invention makes use of recycled styrene butadiene rubber (SBR) granules. The specifically chosen diameters (1.0-4.0 mm) of the rubber granule plays a vital role on the insulation capacity of the sound barrier.

Another aim of the invention is to provide an environmentally friendly sound barrier. One of the most important components of the sound barrier is SBR granules. The granules are obtained from recycled end-of-life tires, which means that one of the main components of the present invention is obtained via recycle. Moreover, the other important components of the present invention such as the carbon fiber mesh, foam and the synthetic grass yarn are also recycled materials. Due to this recycle, a common rubber waste is removed from the environment; moreover, a sound barrier with low carbon footprint is obtained.

### Brief Description of the Drawings

**Fig 1****.** Sectional side view of interior of the sound barrier
**Fig 2****.** Waste carbon fiber mesh
**Fig 3****.** Sectional side view of waste carbon fiber mesh
**Fig 4****.** Side view of waste carbon fiber mesh
**Fig 5****.** Side view of sound barrier
**Fig 6****.** Frontal view of sound barrier with measurements
**Fig 7****.** Frontal view of sound barrier
**Fig 8****.** Sectional view of the sound barrier with measurements
**Fig 9****.** Layered out view of sound barrier
**Fig 10****.** Layered out view of sectional side of sound barrier
**Fig 11****.** Layered out top view of sound barrier
**Fig 12****.** Layered out side view of sound barrier
**Fig 13****.** Side view of sound barrier with measurements
**Fig 14****.** Top view of sound barrier
**Fig 15****.** Sectional side of waste carbon fiber mesh

### Descriptions of References in Drawings

**1.** Waste carbon fiber mesh
**2.** Styrene butadiene rubber (SBR) granule core layer
**3.** Synthetic grass layer
**4.** Low-density polyethylene (LDPE) foam layer
**5.** Vertical sticks of waste carbon fiber mesh
**6.** Horizontal sticks of waste carbon fiber mesh
**7.** Sound Barrier
**8.** Styrene butadiene rubber (SBR) granule panel
**9.** Male locking point
**10.** Female locking point

### Detailed Description of the Invention

The present invention relates to a sound barrier (7) (such as noise wall, sound wall) with a high noise absorption capacity.

A sound barrier (7) comprises of
- a low-density polyethylene (LDPE) foam layer (4) with 2-5 mm-wide slits or a LDPE foam layer (4) covered with synthetic grass with 2-5 mm-wide slits, as a foam layer,
- a synthetic grass layer (3),
- a styrene butadiene rubber (SBR) granule panel (8) with two layers of SBR granule core layers (2) and a waste carbon fiber mesh (1) sandwiched between two SBR granule core layers (2), wherein the SBR granule panel (8) is placed between the LDPE foam layer (4) and the synthetic grass layer (3),

wherein the SBR granule core layer (2) comprises of SBR granule with the diameter size of 1.0 - 4.0 mm obtained from end-of-life tires (ELT), isocyanate as binder, tris(1-chloro-2-propyl) phosphate (TCPP) as fire-retardant, monoethylene glycol (MEG) as catalyst,
wherein the waste carbon fiber mesh (1) is a rectangular mesh with seven horizontal sticks (6) in which there are double horizontal sticks (6) on each horizontal sides of the waste carbon fiber mesh (1) and between the double horizontal sticks (6) there are three horizontal sticks (6) and six vertical sticks (5).

In one embodiment of the sound barrier (7) comprises of, by mass compared to the final product,
- 1.543-1.488% of the low-density polyethylene (LDPE) foam layer (4) with 2-5 mm-wide slits,
- 1.259-1.265% of the synthetic grass layer (3),
- the styrene butadiene rubber (SBR) granule panel (8) with two layers of SBR granule core layer (2) and the waste carbon fiber mesh (1) sandwiched between two SBR granule core layers (2), wherein the SBR granule panel (8) is placed between the LDPE foam layer (4) and the synthetic grass layer (3),

wherein the SBR granule core layer (2) comprises of, by mass compared to the final product, 86.363-86.606% of SBR granule with the diameter size of 1.0 - 4.0 mm obtained from end-of-life tires (ELT), 4.494-4.595% of isocyanate as binder, 0.745-0.785% of tris(1-chloro-2-propyl) phosphate (TCPP) as fire-retardant, 0.02254-0.02778% of monoethylene glycol (MEG) as catalyst,
wherein 5.344-5.462% of the waste carbon fiber mesh (1), by mass compared to the final product, is a rectangular mesh with seven horizontal sticks (6) in which there are double horizontal sticks (6) on each horizontal sides of the waste carbon fiber mesh (1) and between the double horizontal sticks (6) there are three horizontal sticks (6) and six vertical sticks (5).

In one embodiment of the sound barrier (7) comprises of, by mass compared to the final product,
- 3.552-3.697% of the LDPE foam layer (4) covered with synthetic grass with 2-5 mm-wide slits, as a foam layer,
- 1.232-1.238% of the synthetic grass layer (3),
- the styrene butadiene rubber (SBR) granule panel (8) with two layers of SBR granule core layer (2) and the waste carbon fiber mesh (1) sandwiched between two SBR granule core layers (2), wherein the SBR granule panel (8) is placed between the LDPE foam layer (4) and the synthetic grass layer (3),

wherein the SBR granule core layer (2) comprises of, by mass compared to the final product, 84.474-84.791% of SBR granule with the diameter size of 1.0 - 4.0 mm obtained from end-of-life tires (ELT), 4.400-4.495% of isocyanate as binder, 0.729-0.768% of tris(1-chloro-2-propyl) phosphate (TCPP) as fire-retardant, 0.02205-0.02720% of monoethylene glycol (MEG) as catalyst,
wherein 5.232-5.343% of the waste carbon fiber mesh (1), by mass compared to the final product, is a rectangular mesh with seven horizontal sticks (6) in which there are double horizontal sticks (6) on each horizontal sides of the waste carbon fiber mesh (1) and between the double horizontal sticks (6) there are three horizontal sticks (6) and six vertical sticks (5).

In one embodiment of the sound barrier (7) comprises of
- 0.890-0.911 kg of the low-density polyethylene (LDPE) foam layer (4) with 2-5 mm-wide slits,
- 0.729-0.770 kg of the synthetic grass layer (3),
- the styrene butadiene rubber (SBR) granule panel (8) with two layers of SBR granule core layer (2) and the waste carbon fiber mesh (1) sandwiched between two SBR granule core layers (2), wherein the SBR granule panel (8) is placed between the LDPE foam layer (4) and the synthetic grass layer (3),

wherein the SBR granule core layer (2) comprises of 49.799-53.001 kg of SBR granule with the diameter size of 1.0 - 4.0 mm obtained from end-of-life tires (ELT), 2.650-2.750 kg of isocyanate as binder, 0.430-0.480 kg of tris(1-chloro-2-propyl) phosphate (TCPP) as fire-retardant, 0.013-0.017 kg of monoethylene glycol (MEG) as catalyst,
wherein 3.149-3.270 kg of waste carbon fiber mesh (1) is a rectangular mesh with seven horizontal sticks (6) in which there are double horizontal sticks (6) on each horizontal sides of the waste carbon fiber mesh (1) and between the double horizontal sticks (6) there are three horizontal sticks (6) and six vertical sticks (5).

In one embodiment of the sound barrier (7) comprises of
- 2.179-2.220 kg of the LDPE foam layer (4) covered with synthetic grass with 2-5 mm-wide slits, as a foam layer,
- 0.730-0.770 kg of the synthetic grass layer (3),
- the styrene butadiene rubber (SBR) granule panel (8) with two layers of SBR granule core layer (2) and the waste carbon fiber mesh (1) sandwiched between two SBR granule core layers (2), wherein the SBR granule panel (8) is placed between the LDPE foam layer (4) and the synthetic grass layer (3),

wherein the SBR granule core layer (2) comprises of 49.799-53.001 kg of SBR granule with the diameter size of 1.0 - 4.0 mm obtained from end-of-life tires (ELT), 2.650-2.750 kg of isocyanate as binder, 0.430-0.480 kg of tris(1-chloro-2-propyl) phosphate (TCPP) as fire-retardant, 0.013-0.017 kg of monoethylene glycol (MEG) as catalyst,
wherein 3.150-3.270 kg of waste carbon fiber mesh (1) is a rectangular mesh with seven horizontal sticks (6) in which there are double horizontal sticks (6) on each horizontal sides of the waste carbon fiber mesh (1) and between the double horizontal sticks (6) there are three horizontal sticks (6) and six vertical sticks (5).

In another embodiment of the sound barrier (7) comprises of
- 0.911 kg of the low-density polyethylene (LDPE) foam layer (4) with 2-5 mm-wide slits, as a foam layer,
- 0.770 kg of the synthetic grass layer (3),
- the styrene butadiene rubber (SBR) granule panel (8) with two layers of SBR granule core layer (2) and the waste carbon fiber mesh (1) sandwiched between two SBR granule core layers (2), wherein the SBR granule panel (8) is placed between the LDPE foam layer (4) and the synthetic grass layer (3),

wherein SBR granule core layer (2) comprises of 53.001 kg of SBR granule with the diameter size of 1.0 - 4.0 mm obtained from end-of-life tires (ELT), 2.750 kg of isocyanate as binder, 0.480 kg of tris(1-chloro-2-propyl) phosphate (TCPP) as fire-retardant, 0.017 kg of monoethylene glycol (MEG) as catalyst,
wherein 3.270 kg of the waste carbon fiber mesh (1) is a rectangular mesh with seven horizontal sticks (6) in which there are double horizontal sticks (6) on each horizontal sides of the waste carbon fiber mesh (1) and between the double horizontal sticks (6) there are three horizontal sticks (6) and six vertical sticks (5).

In one embodiment of the sound barrier (7) comprises of
- 2.220 kg of the LDPE foam layer (4) covered with synthetic grass with 2-5 mm-wide slits, as a foam layer,
- 0.770 kg of the synthetic grass layer (3),
- the styrene butadiene rubber (SBR) granule panel (8) with two layers of SBR granule core layer (2) and the waste carbon fiber mesh (1) sandwiched between two SBR granule core layers (2), wherein the SBR granule panel (8) is placed between the LDPE foam layer (4) and the synthetic grass layer (3),

wherein the SBR granule core layer (2) comprises of 53.001 kg of SBR granule with the diameter size of 1.0 - 4.0 mm obtained from end-of-life tires (ELT), 2.750 kg of isocyanate as binder, 0.480 kg of tris(1-chloro-2-propyl) phosphate (TCPP) as fire-retardant, 0.017 kg of monoethylene glycol (MEG) as catalyst,
wherein 3.270 kg of waste carbon fiber mesh (1) is a rectangular mesh with seven horizontal sticks (6) in which there are double horizontal sticks (6) on each horizontal sides of the waste carbon fiber mesh (1) and between the double horizontal sticks (6) there are three horizontal sticks (6) and six vertical sticks (5).

In the embodiments where the LDPE foam layer (4) is covered with the synthetic grass by weaving or gluing, which increases the insulation and absorption ability of the sound barrier (7).

In one embodiment of the present invention, the LDPE foam layer (4) has a thickness of 40 mm.

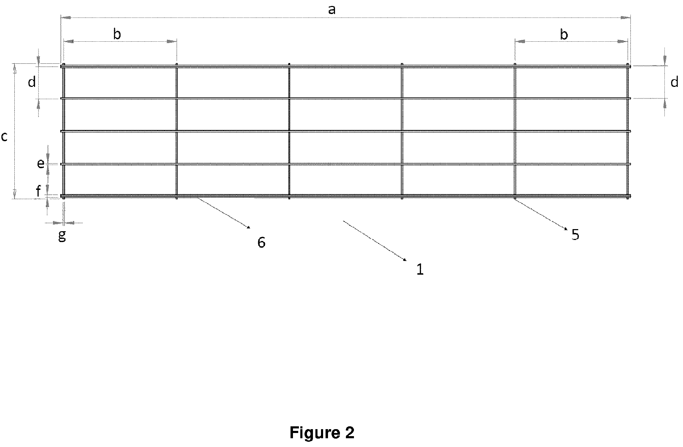

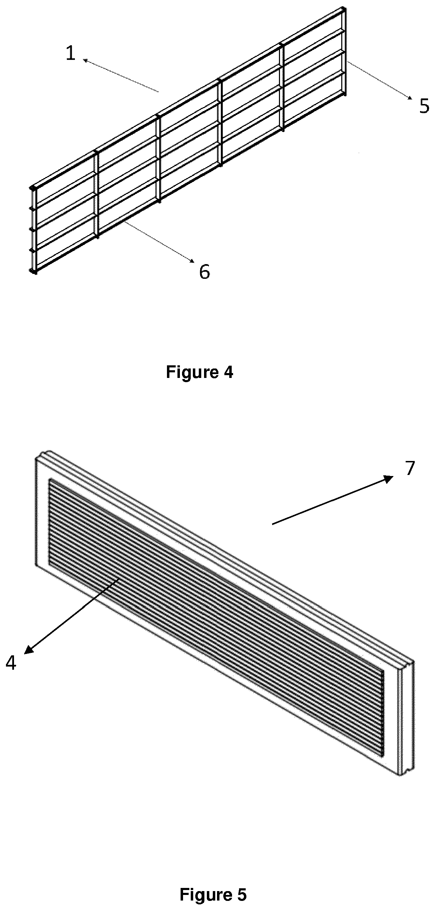

The structure of waste carbon fiber mesh (1) can be seen from Figure 2, Figure 4, Figure 10, Figure 11, Figure 12 and Figure 15. In one embodiment of the invention, the measurements of the waste carbon fiber mesh (1) are as flows based on Figure 2; a: 1975 mm, b: 390 mm, c: 470 mm, d: 113,75 mm, e: 5 mm, f: 10 mm, and g: 5 mm.

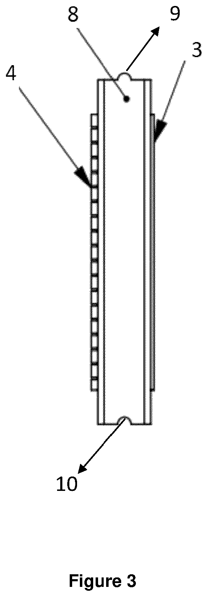

In one embodiment of the present invention (given in Figure 3, Figure 5, Figure 7, Figure 9, Figure 10, Figure 11 and Figure 12), the LPDE foam layer (4) can be covered with a synthetic grass layer, where it is glued to the LPDE foam layer (4). In this embodiment, the LDPE foam layer (4), that is covered with synthetic grass, has 2-5 mm-wide slits as well. In every embodiment of the present invention, the final version the sound barrier (7) has the LDPE foam layer (4) with 2-5 mm-wide slits, regardless of whether it is covered with synthetic grass or not.

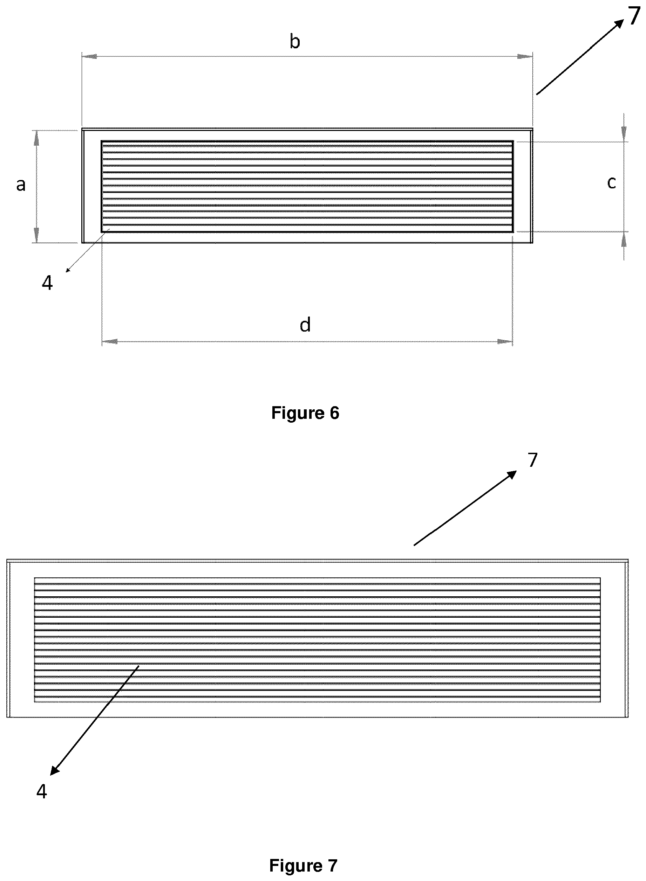

The frontal view of sound barrier (7) can be seen from Figure 6, the LDPE foam layer (4) with 2-5 mm-wide slits is not covered with synthetic grass. In one embodiment of the present invention, the measurements of the sound barrier (7) are as flows based on Figure 6; a: 500 mm, b: 2000 mm, c: 400 mm and d: 1820 mm.

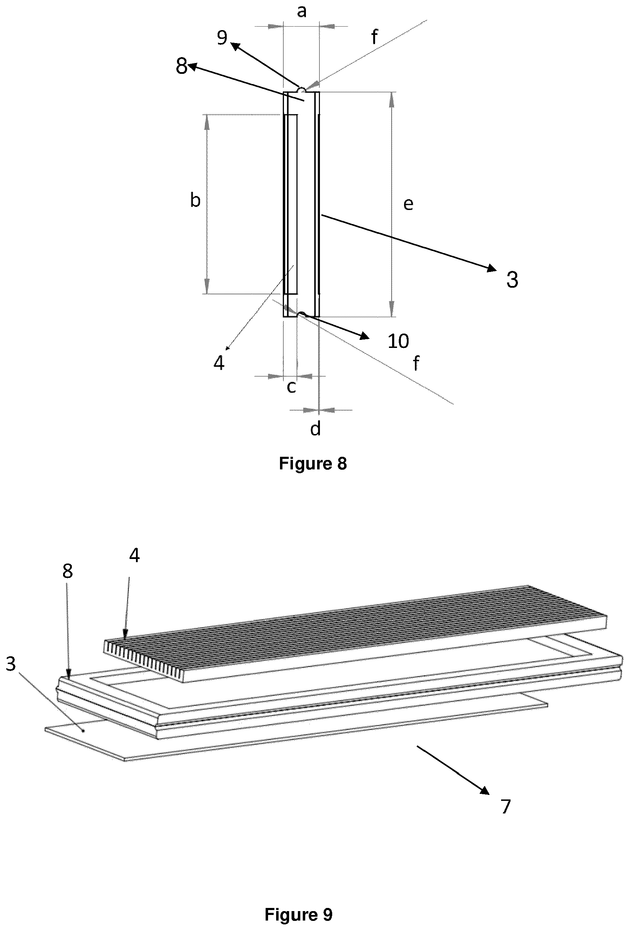

The right-side view of sound barrier (7) can be seen from Figure 8. In one embodiment of the invention, the measurements of the sound barrier (7) are as flows based on Figure 8; a: 80 mm, b: 400 mm, c: 30 mm, d: 5 mm, e: 500 mm and f: radius of recess is 10 mm.

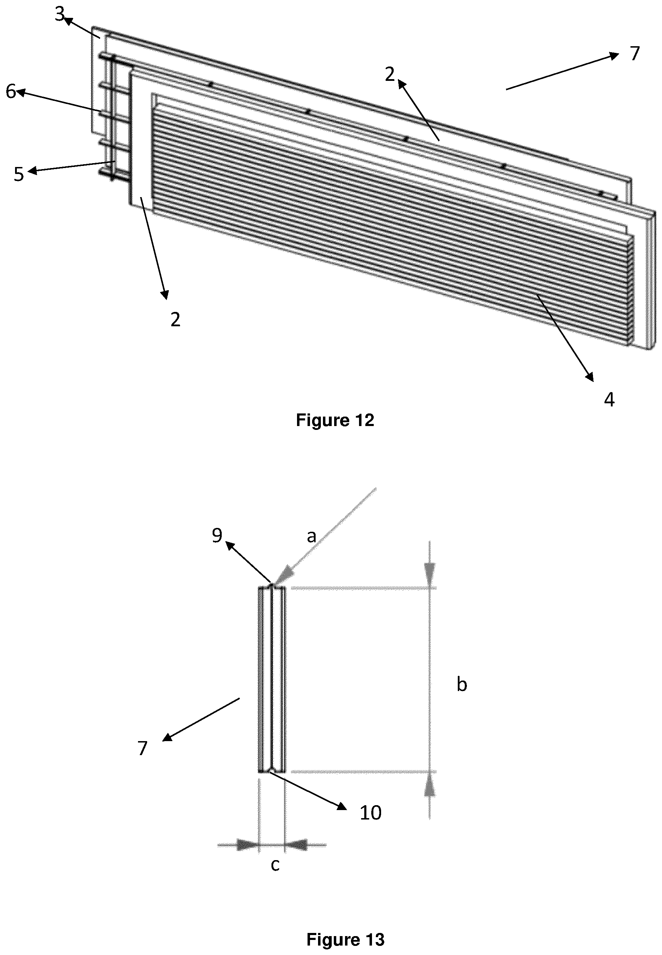

The side view of the sound barrier (7) with measurements can be seen from Figure 13. In one embodiment of the invention, the measurements of the sound barrier (7) are as flows based on Figure 13; a: radius of recess is 10 mm, b: 500 mm and c: 80 mm.

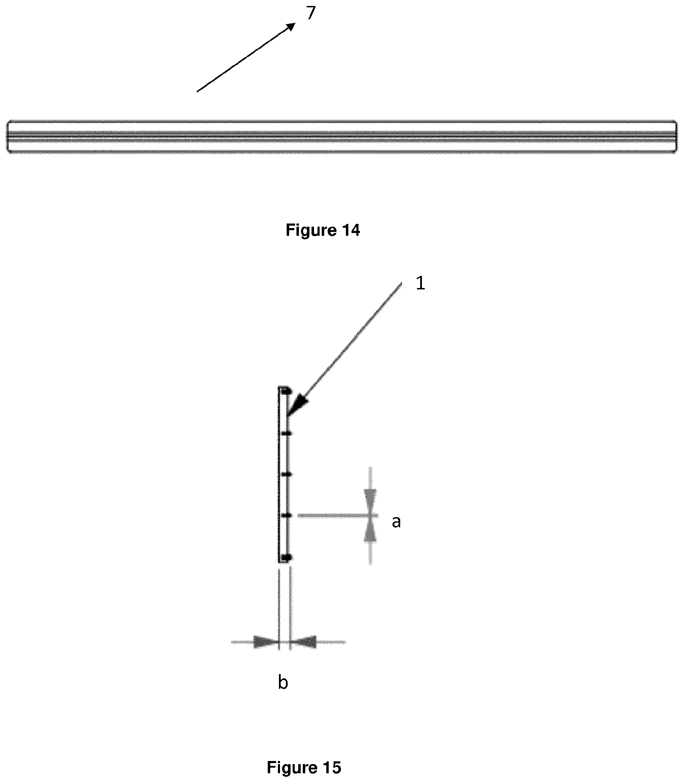

The sectional side of the waste carbon fiber mesh (1) can be seen from Figure 15. In one embodiment of the invention, the measurements of the sound barrier (7) are as flows based on Figure 15; a: 5 mm and b: 30 mm.

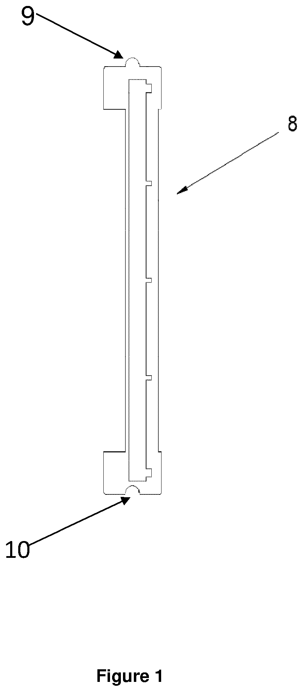

As it can be seen from Figure 1, Figure 3, Figure 8 and Figure 13, the sound barrier (7), have a male locking point (9) and a female locking point (10). These male locking point (9) and a female locking point (10) are present in every single embodiment of the present invention. When more than one sound barrier (7) will be used, the sound barriers (7) can be placed on top of each other. During this placement, the male locking point (9) and the female locking point (10) came in contact with each other and they interlock completely. Due to this complete interlocking between two sound barriers (7), the leakage of air, water and sound is prevented.

In the present invention, the SBR panel (8) refers to the structure that is made of two SBR granule core layers (2) and the waste carbon fiber mesh (1), before the LDPE layer (4) and the synthetic grass layer (3) is applied to it. The SBR panel (8), as it can be seen from the Figure 3 and 9, is observed as one whole panel. In other words, one cannot see the waste carbon fiber mesh (1) inside of it. The waste carbon fiber mesh (1) is sandwich between two SBR granule core layers (2), hence it is trapped inside of a one big SBR granule core layer (2). In addition to the waste carbon fiber mesh (1) not being observed from the outside, the SBR panel (8) is a one whole structure since the SBR granule core layers (2) are fused to each other during the molding process.

In the present invention, the LDPE layer (4) may be covered with synthetic grass, which can be woven or glued on the LDPE layer (4). While in all of the embodiments of the present invention the synthetic grass layer (3) is present. The synthetic grass layer (3), the LDPE foam layer (4) and styrene butadiene rubber (SBR) granule core layers (2) can be any color of choice and a logo/trademarks can be applied on the synthetic grass, if desired. In the embodiments in which the LDPE foam layer (4) is glued or woven with synthetic grass, the color of the synthetic grass glued or woven on the LDPE foam layer (4) can also be adjusted and logo/trademarks can be applied on it as well.

In another embodiment of the invention the sound barrier (7), has measurements of 200-500 cm in length, 100 cm or 50 cm in height and 8 cm in width, which allows the sound barrier to be used in small areas as well and makes it easier to carry the sound barriers (7).

The absorption and insulation abilities of the sound barrier (7) have been tested via several tests. In the present invention, firstly, to determine the ideal SBR granule diameter, different granule diameter values were subjected to a number of physical tests. The conducted tests on different diameters and the results are given in Table 1 and Table 2. As it can be seen from Table 1, when the granule diameter is 1.0-4.0 mm, the blockage of light, water and sound were within acceptable values. Moreover, with this granule diameter value, physically properties are improved as well. Hence, 1.0-4.0 mm diameter size was chosen for the SBR granules.

**Table 1. Determination of SBR granule diameters**

| Granule Diameter (mm) | Light Test | Water Test | Tensile test | Resistance to Wear (Corrosion etc.) | Shore hardness (TS EN ISO 868) | Stone-Chip Test | Waste Water-Dust Test | Result |
|---|---|---|---|---|---|---|---|---|
| 0.8-3.0 | Not passed | Not passed | Low | Low | High | Good | Good | Refused |
| 1.0-4.0 | Not passed | Absorbed | Good | High | Good | Good | Good | Accepted |
| 5.0-10.0 | Passed | Passed | High | High | High | Medium | Medium | Refused |

**Table 2. Determination SBR granule diameters (temperature related tests)**

| Granule Diameter (mm) | Freeze/Thaw Climate Test | Frost Test | Hotness Test | Coldness Test | Result |
|---|---|---|---|---|---|
| 0.8-3.0 | Very Good | Very Good | Low | Very Good | Refused |
| 1.0-4.0 | Good | Very Good | High | Good | Accepted |
| 5.0-10.0 | Bad | Very Good | High | Bad | Refused |

After the SBR granule diameter was determined, its amount within the sound barrier (7), which is the final product, was determined, for the same embodiment. As the size of SBR granules increase, binder ratio, the density of the product and water absorption decreases; on the other hand, the insulation properties increase. However, if the absorption decreases too much, it reduces the absorbability of the product due to the increase in the number of pores. After the determination of the SBR granule size, its amount in the final product was determined via several test and the results are given in Table 3. In the water test, 1 liter of water is poured over the activated rubber barrier made of SBR granules. If the barrier absorbs the water within a certain amount of time, it means that the pores inside the barrier are absorbing the sound as well. For the absorption tests of the present invention, the optimum absorption duration is between 1 and 5 minutes, with the target being 3 minutes. It is aimed to pass 3/4 of the water in the first minute. It is desire for the water to pass neither too quickly nor too slowly. Because sound will also travel through the paths where water travels and will be absorbed. In the light of the tests given in Table 3, it was concluded, for the one embodiment of the present invention, that 84.474-84.791% of SBR granules by mass within the final product would provide the best performance for the present invention.

**Table 3. Determination SBR granule amount percentage by mass within the final product**

| SBR granule percentage by mass | Light test | Amount of water that passes through in 1 minute | Amount of time for the absorption of 1 L of water | Result |
|---|---|---|---|---|
| 80-84.473% | Not passed | 755-775 mL | 2.5 minutes | Refused |
| 84.474-84.791% | Not passed | 745-750 mL | 3.0-3.1 minutes | Accepted |
| 84.792-90% | Not passed | 740-745 mL | 3.5 minutes | Refused |

The surfaces of all SBR granule grains must be coated with binder (isocyanate). If it is too much or too little, a faulty product would be produced. If it is too much, vomiting is observed on the surface, in other words the binder leaks out of the sound barrier (7). If the binder's amount is insufficient, it cannot fully bond and there will be breaks and surface defects. Hence, the 4.400-4.495% binder was chosen for the one embodiment of the present invention. The test results regarding the amount of the binder are given in Table 4.

**Tablo 4. Determination of binder percentage by mass within the final product**

| Binder percentage by mass | After curing process | Result |
|---|---|---|
| 4.000-4.399% | Minor vomiting | Refused |
| 4.400-4.495% | Good | Accepted |
| 4.496-5.000% | Minor cracks | Refused |

The mass of the fire-retardant, tris(1-chloro-2-propyl) phosphate (TCPP), within the final product was determined with tests as well. Different amounts of fire-retardant were used to see how its amount affects the sound barrier's (7) fire retardant ability. For one embodiment of the present invention, it was seen that 0.729-0.768% fire retardant by mass within the final product was the suitable value. The results are given in Table 5.

**Tablo 5. Determination of fire-retardant percentage by mass within the final product**

| Fire retardant by mass | Surface after curing process | Burning Test (EN1794-2) | Results |
|---|---|---|---|
| 0.5-0.728 % | Good | Not passed | Refused |
| 0.729-0.768 % | Good | Passed | Accepted |
| 0.769-0.95 % | Obvious cracks | Passed | Refused |

The total preparation (cooking) time without adding catalyst for the styrene butadiene rubber (SBR) granule core layers (2) is about 40 minutes. A catalyst was used to reduce the preparation time to less than 40 minutes and experiments were conducted to determine the ratio of it. If the catalyst is used too much, curing will begin before it even reaches the laying stage (molds), and sometimes it may start curing even while in the mixer. The curing must be under a certain temperature and pressure in the press machine. Laying time and catalyst amount are proportional to each other. With the use of catalyst, the laying time is determined optimally. It was previously determined during the lean production studies that laying must be done within 1 minute, since too much causes loss of process efficiency, and too little causes quality problems in the product. The experiments and the results that were obtained during the research of catalyst amount determination are given in Table 6, for one embodiment of the present invention.

**Table 6. Determination of catalyst percentage by mass within the final product**

| Catalyst by mass | Surface After the Curing Process | Result |
|---|---|---|
| 0.005-0.010% | Cooking time reduced to 30-35 minutes - Product is in good shape | Refused |
| 0.011-0.015% | Cooking time reduced to 25-30 minutes - Product is in good shape | Refused |
| 0.016-0.02204% | Cooking time reduced to 25-30 minutes - Product is in good shape | Refused |
| 0.02205-0.02720% | Cooking time is between 20-25 minutes - Gives 1 minute for laying into the molds | Accepted |
| 0.02721-0.035% | Cooking time is between 20-25 minutes - Curing starts during the laying out process | Refused |
| 0.036-0.040% | Cooking time is between 15-20 minutes - Curing starts even before the laying out process | Refused |

Once styrene butadiene rubber (SBR) granule core layer (2) is place into molds, the waste carbon fiber mesh (1) is placed into it and another layer of styrene butadiene rubber (SBR) granule core layer (2) is placed on top of the waste carbon fiber mesh (1). This way, the waste carbon fiber mesh (1) is sandwiched between two layer of styrene butadiene rubber (SBR) granule core layer (2). Hence, the waste carbon fiber mesh (1) is not visible from the outside and it acts out as skeleton for the sound barrier (7) and give endurance to it during extreme weather conditions such as wind and rain. The endurance of the waste carbon fiber mesh (1) against wind was tested. For this test, 145 km/hour (90 mph) wind and 1.05 kN/m² pressure were applied. Based on the results, given in Table 7, the number of vertical sticks (5) and horizontal sticks (6) carbon sticks of the waste carbon fiber mesh (1) was determined as 7 and 6 respectively, for the sound barrier (7).

**Table 7. Determination of the vertical sticks (5) and horizontal sticks (6) of the waste carbon fiber mesh (1) based on the physical endurance results (Wind: 145 km/hour (90 mph) and Pressure: 1.05 kN/m²)**

| Number of Horizontal Sticks (6) | Number of Vertical Sticks (5) | Result of the Wind Test | Result |
|---|---|---|---|
| 3 | 4 | Did not pass | Refused |
| 5 | 6 | Passed, but deformation occurred once the product cooled down | Refused |
| 6 | 6 | Passed, but deformation occurred once the product cooled down | Refused |
| 7 | 6 | Passed | Accepted |

In the present invention, seven horizontal sticks (6) and six vertical sticks (5) were used for the waste carbon fiber mesh (1). On each horizontal side of the waste carbon fiber mesh (1), there are double horizontal sticks (6). These double horizontal sticks (6) are wired or fused to each other. If singular horizontal sticks (6) were use for the horizontal sides of the waste carbon fiber mesh (1), the sound barrier (7) is easily bend with wind etc., hence the sound barrier (7) does not preserve its shape. However, when doubled horizontal sticks (6) are placed on each horizontal side of the waste carbon fiber mesh (1), which is in the shape of a rectangle, the sound barrier (7) does not bend or lose its shape with exterior forces such as wind. In other words, these double horizontal sticks (6) that are placed on each horizontal side of the waste carbon fiber mesh (1) provide the sound barrier (7) durability, ability to endure harsh weather conditions and helps the sound barrier (7) to protect is shape during these conditions without bending etc. All of the remaining sticks of the waste carbon fiber mesh (1) are singular. The high number of sticks were not used to be cost-effective. For the structure, rectangular mesh structure was chosen since it was the structure that gave the best results during the development tests. In addition, the long-term performance tests were performed on the sound barrier (7). Based on the results, it is expected that the sound barrier (7) will perform its function for years.

The frontal side of the sound barrier (7), which is given in the Figure 6, is covered with LDPE foam layer (4). In some embodiments, onto this foam layer (4) synthetic grass can be woven or glued on, to increase the sound insulation and absorption ability. The thickness of LDPE foam layer is 40 mm but when in some embodiments the synthetic grass is woven or glued the thickness of the LDPE foam layer (4) decreases. The test results regarding the thickness of the LDPE foam layer (4) are given in Table 8. Moreover, in the present invention the LDPE foam layer (4) has 2-5 mm-wide slits (regardless of whether the LDPE foam layer (4) is covered with synthetic grass or not and when the LDPE foam layer (4) is covered with synthetic grass, this grass has 2-5 mm-wide slits as well). The 2-5 mm-wide slits increase the sound absorption and insulation ability of the sound barrier (7). When the sound reaches to the sound barrier (7), it travels through the sound barrier (7). The longer this travel takes, the better the sound barrier (7) is. These 2-5 mm-wide slits make the sound take much more time during this travel and hence the sound absorption and insulation are achieved. The tests that were done during the research for the present invention, it was observed that the presence of these 2-5 mm-wide slits improved the absorption and insulation abilities of the sound barrier (7) compared to the ones without any slits or slits with lower width measurements.

**Tablo 8. Determination of the thickness of LDPE foam**

| LPDE foam thickness before the synthetic grass is glued on | Absorption | Cost | Result |
|---|---|---|---|
| 30 mm | Low | Low | Refused |
| 40 mm | Good | Low | Accepted |
| 60 mm | Good | High | Refused |

These parameters, which for one embodiment of the present invention, that are disclosed in the Tables 1-8, as it was stated before, had been selected through extensive tests and experiments. The final composition was decided with these results to obtain the high sound absorption. The sound insulation and absorption abilities of the sound barrier (7) solely depends on these parameters.

The production method of a sound barrier (7) is as follows;
i. weighing of styrene butadiene rubber (SBR) granule parts obtained from the recycling of 1.0 - 4.0 mm end-of-life tires (ELT),
ii. transferring the prepared SBR granules to the mixer,
iii. adding isocyanate as binder, monoethylene glycol (MEG) as catalyst and tris(1-chloro-2-propyl) phosphate (TCPP) as fire-retardant and water to a vertical mixer,
iv. mixing all the materials added to a vertical mixer to form a homogeneous mixture,
v. transferring more than half of the prepared mixture to molds without losing time and performing gauging process to the mixture transferred to molds,
vi. placing a waste carbon fiber mesh (1), wherein the waste carbon fiber mesh (1) is a rectangular mesh with seven horizontal sticks (6) in which there are double horizontal sticks (6) on each horizontal sides of the waste carbon fiber mesh (1) and between the double horizontal sticks (6) there are three horizontal sticks (6) and six vertical sticks (5), into molds and transferring the remaining of the prepared mixture to molds, hence preparing a SBR granule panel (8),
vii. laying and performing molding process to the SBR granule panel (8), by pressing with pressure, 133°C of upper temperature and 128°C lower temperature,
viii. cooling after the pressing,
ix. gluing a low-density polyethylene (LDPE) foam layer (4) with no slits on one side of the SBR granule panel (8) and cutting 2-5 mm-wide slits or a LDPE foam layer (4) with no slits and weaving or gluing synthetic grass to the LDPE foam layer (4) with no slits and cutting 2-5 mm-wide slits,
x. gluing a synthetic grass layer (3) into the other side of the SBR granule panel (8),
xi. storing the obtained product after cooling.

In one embodiment of the production method of the sound barrier (7) is as follows;
i. weighing of styrene butadiene rubber (SBR) granule parts obtained from the recycling of 1.0 - 4.0 mm end-of-life tires (ELT),
ii. transferring the prepared SBR granules to the mixer,
iii. adding isocyanate as binder, monoethylene glycol (MEG) as catalyst and tris(1-chloro-2-propyl) phosphate (TCPP) as fire-retardant and water to a vertical mixer,
iv. mixing all the materials added to a vertical mixer to form a homogeneous mixture,
v. transferring more than half of the prepared mixture to molds without losing time and performing the performing gauging process to the mixture transferred to molds,
vi. placing the waste carbon fiber mesh (1), wherein the waste carbon fiber mesh (1) is a rectangular mesh with seven horizontal sticks (6) in which there are double horizontal sticks (6) on each horizontal sides of the waste carbon fiber mesh (1) and between the double horizontal sticks (6) there are three horizontal sticks (6) and six vertical sticks (5), into molds and transferring the remaining of the prepared mixture to molds, hence preparing the SBR granule panel (8),
vii. laying and performing molding process to the SBR granule panel (8), pressing with pressure, upper 133°C of upper temperature and 128°C lower temperature,
viii. cooling after the pressing,
ix. gluing the low-density polyethylene (LDPE) foam layer (4) with no slits on one side of the SBR granule panel (8),
x. weaving or gluing synthetic grass to the LDPE foam layer (4) with no slits and cutting 2-5 mm-wide slits,
xi. gluing the synthetic grass layer (3) into the other side of the SBR granule panel (8),
xii. storing the obtained product after cooling.

In one embodiment of the production method of a sound barrier (7) is as follows;
i. weighing of styrene butadiene rubber (SBR) granule parts obtained from the recycling of 1.0 - 4.0 mm end-of-life tires (ELT),
ii. transferring the prepared SBR granules to the mixer,
iii. adding isocyanate as binder, monoethylene glycol (MEG) as catalyst and tris(1-chloro-2-propyl) phosphate (TCPP) as fire-retardant and water to a vertical mixer,
iv. mixing all the materials added to a vertical mixer to form a homogeneous mixture,
v. transferring more than half of the prepared mixture to molds without losing time and performing gauging process to the mixture transferred to molds,
vi. placing a waste carbon fiber mesh (1), wherein the waste carbon fiber mesh (1) is a rectangular mesh with seven horizontal sticks (6) in which there are double horizontal sticks (6) on each horizontal sides of the waste carbon fiber mesh (1) and between the double horizontal sticks (6) there are three horizontal sticks (6) and six vertical sticks (5), into molds and transferring the remaining of the prepared mixture to molds, hence preparing a SBR granule panel (8),
vii. laying and performing molding process to the SBR granule panel (8), by pressing with pressure, 133°C of upper temperature and 128°C lower temperature,
viii. cooling after the pressing,
ix. gluing a low-density polyethylene (LDPE) foam layer (4) with no slits on one side of the SBR granule panel (8) and cutting 2-5 mm-wide slits,
x. gluing a synthetic grass layer (3) into the other side of the SBR granule panel (8),
xi. storing the obtained product after cooling.

In one embodiment of the production method of the sound barrier (7) is as follows;
i. weighing 84.331-84.642% of styrene butadiene rubber (SBR) granule parts by mass, obtained from the recycling of 1.0 - 4.0 mm end-of-life tires (ELT),
ii. transferring the prepared SBR granules to the mixer,
iii. adding 4.392-4.487% of isocyanate as binder by mass, 0.02201-0.02715% of monoethylene glycol (MEG) as catalyst by mass, 0.728-0.767% of tris(1-chloro-2-propyl) phosphate (TCPP) as fire-retardant by mass and 0.169-0.176% water by mass, to a vertical mixer,
iv. mixing all the materials added to a vertical mixer for 3 minutes to form a homogeneous mixture,
v. transferring 60% of the prepared mixture to molds without losing time and performing the performing gauging process to the mixture transferred to molds,
vi. placing 5.223-5.334% of the waste carbon fiber mesh (1) by mass, wherein the waste carbon fiber mesh (1) is a rectangular mesh with seven horizontal sticks (6) in which there are double horizontal sticks (6) on each horizontal sides of the waste carbon fiber mesh (1) and between the double horizontal sticks (6) there are three horizontal sticks (6) and six vertical sticks (5), into molds and transferring the remaining 40% of the prepared mixture to molds, hence preparing the SBR granule panel (8),
vii. laying in 1 minute and performing molding process to the SBR granule panel (8), by pressing for 20 minutes with pressure of 200 bar, 133°C of upper temperature and 128°C lower temperature,
viii. cooling for half a day after the pressing,
ix. gluing 1.454-1.507% of the low-density polyethylene (LDPE) foam layer (4) with no slits by mass, on one side of the SBR granule panel (8) and cutting 2-5 mm-wide slits,
x. gluing 1.230-1.236% of the synthetic grass layer (3) by mass, into the other side of the SBR panel (8),
xi. storing the obtained product after cooling.

In one embodiment of the production method of the sound barrier (7) is as follows;
i. weighing 84.331-84.642% of styrene butadiene rubber (SBR) granule parts by mass, obtained from the recycling of 1.0 - 4.0 mm end-of-life tires (ELT),
ii. transferring the prepared SBR granules to the mixer,
iii. adding 4.392-4.487% of isocyanate as binder by mass, 0.02201-0.02715% of monoethylene glycol (MEG) as catalyst by mass, 0.728-0.767% of tris(1-chloro-2-propyl) phosphate (TCPP) as fire-retardant by mass and 0.169-0.176% water by mass, to a vertical mixer,
iv. mixing all the materials added to a vertical mixer for 3 minutes to form a homogeneous mixture,
v. transferring 60% of the prepared mixture to molds without losing time and performing the performing gauging process to the mixture transferred to molds,
vi. placing 5.223-5.334% of the waste carbon fiber mesh (1) by mass, wherein the waste carbon fiber mesh (1) is a rectangular mesh with seven horizontal sticks (6) in which there are double horizontal sticks (6) on each horizontal sides of the waste carbon fiber mesh (1) and between the double horizontal sticks (6) there are three horizontal sticks (6) and six vertical sticks (5), into molds and transferring the remaining 40% of the prepared mixture to molds, hence preparing the SBR granule panel (8),
vii. laying in 1 minute and performing molding to the SBR granule panel (8), by pressing for 20 minutes with pressure of 200 bar, 133°C of upper temperature and 128°C lower temperature,
viii. cooling for half a day after the pressing,
ix. gluing 3.546-3.691% of the low-density polyethylene (LDPE) foam layer (4) with no slits by mass, on one side of the SBR granule panel (8),
x. weaving or gluing synthetic grass to the LDPE foam layer (4) with no slits and cutting 2-5 mm-wide slits,
xi. gluing 1.230-1.236% of the synthetic grass layer (3) by mass, into the other side of the SBR granule panel (8),
xii. storing the obtained product after cooling.

In one embodiment of the production method of the sound barrier (7) is as follows;
i. weighing 49.799-53.001 kg of styrene butadiene rubber (SBR) granule parts obtained from the recycling of 1.0 - 4.0 mm end-of-life tires (ELT),
ii. transferring the prepared SBR granules to the mixer,
iii. adding 2.650-2.750 kg of isocyanate as binder, 0.013-0.017 kg of monoethylene glycol (MEG) as catalyst and 0.430-0.480 kg of tris(1-chloro-2-propyl) phosphate (TCPP) as fire-retardant and 0.100-0.110 kg of water to a vertical mixer,
iv. mixing all the materials added to a vertical mixer for 3 minutes to form a homogeneous mixture,
v. transferring 60% of the prepared mixture to molds without losing time and performing the performing gauging process to the mixture transferred to molds,
vi. placing 3.150-3.271 kg of the waste carbon fiber mesh (1), wherein the waste carbon fiber mesh (1) is a rectangular mesh with seven horizontal sticks (6) in which there are double horizontal sticks (6) on each horizontal sides of the waste carbon fiber mesh (1) and between the double horizontal sticks (6) there are three horizontal sticks (6) and six vertical sticks (5), into molds and transferring the remaining 40% of the prepared mixture to molds, hence preparing the SBR granule panel (8),
vii. laying in 1 minute and performing molding process to the SBR granule panel (8), by pressing for 20 minutes with pressure of 200 bar, 133°C of upper temperature and 128°C lower temperature,
viii. cooling for half a day after the pressing,
ix. gluing 0.890-0.910 kg of the low-density polyethylene (LDPE) foam layer (4) with no slits on one side of the SBR granule panel (8) and cutting 2-5 mm-wide slits,
x. gluing 0.730-0.770 kg of the synthetic grass layer (3) into the other side of the SBR panel (8),
xi. storing the obtained product after cooling.

In one embodiment of the production method of the sound barrier (7) is as follows;
i. weighing 49.799-53.001 kg of styrene butadiene rubber (SBR) granule parts obtained from the recycling of 1.0 - 4.0 mm end-of-life tires (ELT),
ii. transferring the prepared SBR granules to the mixer,
iii. adding 2.650-2.750 kg of isocyanate as binder, 0.013-0.017 kg of monoethylene glycol (MEG) as catalyst by mass and 0.430-0.480 kg of tris(1-chloro-2-propyl) phosphate (TCPP) as fire-retardant and 0.100-0.110 kg of water to a vertical mixer,
iv. mixing all the materials added to a vertical mixer for 3 minutes to form a homogeneous mixture,
v. transferring 60% of the prepared mixture to molds without losing time and performing the performing gauging process to the mixture transferred to molds,
vi. placing 3.150-3.271 kg of the waste carbon fiber mesh (1), wherein the waste carbon fiber mesh (1) is a rectangular mesh with seven horizontal sticks (6) in which there are double horizontal sticks (6) on each horizontal sides of the waste carbon fiber mesh (1) and between the double horizontal sticks (6) there are three horizontal sticks (6) and six vertical sticks (5), into molds and transferring the remaining 40% of the prepared mixture to molds, hence preparing the SBR granule panel (8),
vii. laying within 1 minute and performing molding process to the SBR granule panel (8), by pressing for 20 minutes with pressure of 200 bar, 133°C of upper temperature and 128°C lower temperature,
viii. cooling for half a day after the pressing,
ix. gluing 2.180-2.220 kg of the low-density polyethylene (LDPE) foam layer (4) with no slits, on one side of the SBR granule panel (8),
x. weaving or gluing synthetic grass to the LDPE foam layer (4) and cutting 2-5 mm-wide slits,
xi. gluing 0.730-0.770 kg of the synthetic grass layer (3) into the other side of the SBR granule panel (8),
xii. storing the obtained product after cooling.

In another embodiment of the production method of the sound barrier (7) is as follows;
i. weighing 53.001 kg of styrene butadiene rubber (SBR) granule parts obtained from the recycling of 1.0 - 4.0 mm end-of-life tires (ELT),
ii. transferring the prepared SBR granules to the mixer,
iii. adding 2.750 kg of isocyanate as binder, 0.017 kg of monoethylene glycol (MEG) as catalyst and 0.480 kg of tris(1-chloro-2-propyl) phosphate (TCPP) as fire-retardant and 0.110 kg of water to a vertical mixer,
iv. mixing all the materials added to a vertical mixer for 3 minutes to form a homogeneous mixture,
v. transferring 60% of the prepared mixture to molds without losing time and performing the performing gauging process to the mixture transferred to molds,
vi. placing 3.271 kg of the waste carbon fiber mesh (1), wherein the waste carbon fiber mesh (1) is a rectangular mesh with seven horizontal sticks (6) in which there are double horizontal sticks (6) on each horizontal sides of the waste carbon fiber mesh (1) and between the double horizontal sticks (6) there are three horizontal sticks (6) and six vertical sticks (5), into molds and transferring the remaining 40% of the prepared mixture to molds, hence preparing the SBR granule panel (8),
vii. laying within 1 minute and performing molding process to the SBR granule panel (8), by pressing for 20 minutes with pressure of 200 bar, 133°C of upper temperature and 128°C lower temperature,
viii. cooling for half a day after the pressing,
ix. gluing 0.910 kg of the low-density polyethylene (LDPE) foam layer (4) with no slits on one side of the SBR granule panel (8) and cutting 2-5 mm-wide slits,
x. gluing 0.770 kg of the synthetic grass layer (3) into the other side of the SBR panel (8),
xi. storing the obtained product after cooling.

In one embodiment of the production method of the sound barrier (7) is as follows;
i. weighing 53.001 kg of styrene butadiene rubber (SBR) granule parts obtained from the recycling of 1.0 - 4.0 mm end-of-life tires (ELT),
ii. transferring the prepared SBR granules to the mixer,
iii. adding 2.750 kg of isocyanate as binder, 0.017 kg of monoethylene glycol (MEG) as catalyst by mass and 0.480 kg of tris(1-chloro-2-propyl) phosphate (TCPP) as fire-retardant and 0.110 kg of water to a vertical mixer,
iv. mixing all the materials added to a vertical mixer for 3 minutes to form a homogeneous mixture,
v. transferring 60% of the prepared mixture to molds without losing time and performing the performing gauging process to the mixture transferred to molds,
vi. placing 3.271 kg of the waste carbon fiber mesh (1), wherein the waste carbon fiber mesh (1) is a rectangular mesh with seven horizontal sticks (6) in which there are double horizontal sticks (6) on each horizontal sides of the waste carbon fiber mesh (1) and between the double horizontal sticks (6) there are three horizontal sticks (6) and six vertical sticks (5), into molds and transferring the remaining 40% of the prepared mixture to molds, hence preparing the SBR granule panel (8),
vii. laying within 1 minute and performing molding process to the SBR granule panel (8), by pressing for 20 minutes with pressure of 200 bar, 133°C of upper temperature and 128°C lower temperature,
viii. cooling for half a day after the pressing,
ix. gluing 2.220 kg of the low-density polyethylene (LDPE) foam layer (4) with no slits, on one side of the SBR granule panel (8),
x. weaving or gluing synthetic grass to the LDPE foam layer (4) and cutting 2-5 mm-wide slits,
xi. gluing 0.770 kg of the synthetic grass layer (3) into the other side of the SBR granule panel (8),
xii. storing the obtained product after cooling.

In one embodiment of the present invention, during the production prosses, the LDPE foam layer (4) with no slits can be directly glued on the SBR granule panel (8) and then 2-5 mm-wide slits are cut. In other embodiments, where the LDPE foam layer (4) is covered with synthetic grass, the LDPE foam layer (4) with no slits is firstly glued on to the SBR granule panel (8) and synthetic grass is woven or glued on to the LDPE foam layer (4). Then, the 2-5 mm-wide slits are cut on the LDPE foam layer (4) with synthetic grass. In either embodiment, the LDPE foam layer (4) has 2-5 mm-wide slits on it, when the sound barrier (7) is in its final form.

In the present invention, water acts as if it is a kind of catalyst. However, the purpose of water is to aid the curing process. If there is too much water, the product will swell. If less water is added, it will be observed that the product does not start curing within the actual curing time and the production of sound barrier (7) takes longer. The test was performed with the same type of granules that did not contain more moisture than necessary (i.e., not wet). During the production process of the sound barrier (7), water was used as well. However, since during the production process water is vaporized, it is not present in the final product while the other materials used in the production process do not vaporize. To put in context the boiling points of isocyanate, MEG and TCPP are 314 °C, 197.3 °C and 290 °C, respectively. In other words, their boiling points are all higher than water, which is 100 °C at sea level. Considering the fact that, during the process temperatures between 128-133 °C are achieved, entirety of water is vaporized. In some embodiments, for precise adjustment, different percentages of water between 1 and 4 per thousand were tested and 100-150 mL of water, which corresponds to approximately 2 per thousand, was chosen to be used. In Table 9, mass percentages of mass for water (for one embodiment) are given. These values are for the starting steps, in the final product the water is not present, due to its vaporization during curing and cooking processes.

**Tablo 9. Determination of initial water percentage by mass**

| Water Percentage by mass | Surface after curing process | Result |
|---|---|---|
| 0.120-0.168% | Curing process was not achieved | Refused |
| 0.169-0.176% | Good | Accepted |
| 0.177-0.440% | Swellings were observed on the surface, the largest of which was 1 cm in diameter. | Refused |
| 0.440-0.500% | Swellings were observed on the surface, the largest of which was 1 cm in diameter. | Refused |

During the production process one embodiment of the sound barrier (7), determined parameters were used (Table 1-9). SBR granules, isocyanate as binder, water, monoethylene glycol (MEG) as catalyst and tris(1-chloro-2-propyl) phosphate (TCPP) as fire-retardant are all placed in the vertical mixer and mixed for 3 minutes. As it was stated earlier, the styrene butadiene rubber (SBR) granule core layers (2) are prepared in a vertical mixer for 3 minutes. This mixing duration was determined experimentally, and it was chosen since it gives 1 minute window to lay out the mixture into molds. Other mixing times made it impossible, to lay out the mixture into molds. The results obtained during the determination of the mixing time is given in Table 10.

**Table 10. Determination of the mixing time**

| Duration (min) | Homogeneity after the curing process | Curing Process Initiation | Time Window to Lay Out | Result |
|---|---|---|---|---|
| 1 | Non-Homogenous | Curing did not start | Not feasible to lay out | Refuse |
| 3 | Homogenous | Curing did not start | 1 minute | Accepted |
| 5 | Homogenous | Curing did start | Not feasible to lay out | Refuse |
| 6 | Homogenous | Curing did start | Not feasible to lay out | Refuse |

Certain portion of prepared mixture placed into molds and the waste carbon fiber mesh (1) is placed onto the mixture and remaining mixture is poured on top of the waste carbon fiber mesh (1). Hence, the waste carbon mesh (1) is trapped inside of the mixture can no longer be seen from the outside. After pouring the remaining mixture is molded.

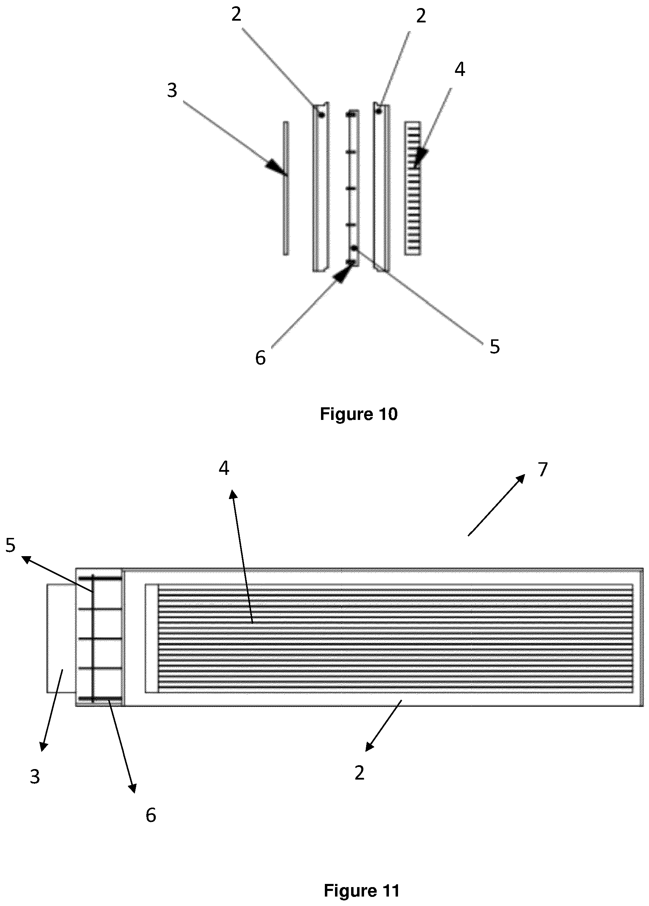

On the other side of the production process, LDPE foam layer (4) with no slits and synthetic grass layer (3) are placed on either side of the SBR granule panel (8). In some embodiment of the present invention, the LDPE foam layer (4) is covered with synthetic grass via gluing with a latex-based glue or weaving the synthetic grass to the LDPE foam layer (4) and then 2-5 mm-wide slits are cut. The synthetic grass used in the present invention and the other embodiments of the present invention, is prepared at least 24 hours prior to usage. The other side of the sound barrier (7) do not have a LDPE foam layer (4) but only a synthetic grass layer (3), which is glued onto the SBR granule panel (8). Therefore, one side of the final product has synthetic grass layer (3) and the other side of the final product has LDPE foam layer (4). Between the synthetic grass layer (3) and the LDPE foam layer (4), the SBR granule panel (8) is placed. Inside of the SBR granule panel (8), there are two SBR granule core layers (2), in which the waste carbon fiber mesh (1) is trapped between these two SBR granule layers (2), this structure of the present invention can be seen in Figure 10 and Figure 12. Finally, the side of the final product that has the synthetic grass layer (3). The final product can have height changing 50-100 cm, width 8 cm and length 200-500 cm.

## Claims

1. A sound barrier (7) with high sound absorption capacity, **characterized by** comprising,
• a low-density polyethylene (LDPE) foam layer (4) with 2-5 mm-wide slits or a LDPE foam layer (4) covered with synthetic grass with 2-5 mm-wide slits, as a foam layer,
• a synthetic grass layer (3),
• a styrene butadiene rubber (SBR) granule panel (8) with two layers of SBR granule core layers (2) and a waste carbon fiber mesh (1) sandwiched between two SBR granule core layers (2), wherein the SBR granule panel (8) is placed between the LDPE foam layer (4) and the synthetic grass layer (3),
wherein the SBR granule core layer (2) comprises of SBR granule with the diameter size of 1.0 - 4.0 mm obtained from end-of-life tires (ELT), isocyanate as binder, tris(1-chloro-2-propyl) phosphate (TCPP) as fire-retardant, monoethylene glycol (MEG) as catalyst,
wherein the waste carbon fiber mesh (1) is a rectangular mesh with seven horizontal sticks (6) in which there are double horizontal sticks (6) on each horizontal sides of the waste carbon fiber mesh (1) and between the double horizontal sticks (6) there are three horizontal sticks (6) and six vertical sticks (5).

2. A sound barrier (7) according to Claim 1, **characterized by** comprising, by mass compared to the final product;
• 1.543-1.488% of the low-density polyethylene (LDPE) foam layer (4) with 2-5 mm-wide slits,
• 1.259-1.265% of the synthetic grass layer (3),
• the styrene butadiene rubber (SBR) granule panel (8) with two layers of SBR granule core layer (2) and the waste carbon fiber mesh (1) sandwiched between two SBR granule core layers (2), wherein the SBR granule panel (8) is placed between the LDPE foam layer (4) and the synthetic grass layer (3),
wherein the SBR granule core layer (2) comprises of, by mass compared to the final product, 86.363-86.606% of SBR granule with the diameter size of 1.0 - 4.0 mm obtained from end-of-life tires (ELT), 4.494-4.595% of isocyanate as binder, 0.745-0.785% of tris(1-chloro-2-propyl) phosphate (TCPP) as fire-retardant, 0.02254-0.02778% of monoethylene glycol (MEG) as catalyst,
wherein 5.344-5.462% of the waste carbon fiber mesh (1), by mass compared to the final product, is a rectangular mesh with seven horizontal sticks (6) in which there are double horizontal sticks (6) on each horizontal sides of the waste carbon fiber mesh (1) and between the double horizontal sticks (6) there are three horizontal sticks (6) and six vertical sticks (5).

3. A sound barrier (7) according to Claim 1, **characterized by** comprising, by mass compared to the final product;
• 3.552-3.697% of the LDPE foam layer (4) covered with synthetic grass with 2-5 mm-wide slits, as a foam layer,
• 1.232-1.238% of the synthetic grass layer (3),
• the styrene butadiene rubber (SBR) granule panel (8) with two layers of SBR granule core layer (2) and the waste carbon fiber mesh (1) sandwiched between two SBR granule core layers (2), wherein the SBR granule panel (8) is placed between the LDPE foam layer (4) and the synthetic grass layer (3),
wherein the SBR granule core layer (2) comprises of, by mass compared to the final product, 84.474-84.791% of SBR granule with the diameter size of 1.0 - 4.0 mm obtained from end-of-life tires (ELT), 4.400-4.495% of isocyanate as binder, 0.729-0.768% of tris(1-chloro-2-propyl) phosphate (TCPP) as fire-retardant, 0.02205-0.02720% of monoethylene glycol (MEG) as catalyst,
wherein 5.232-5.343% of the waste carbon fiber mesh (1), by mass compared to the final product, is a rectangular mesh with seven horizontal sticks (6) in which there are double horizontal sticks (6) on each horizontal sides of the waste carbon fiber mesh (1) and between the double horizontal sticks (6) there are three horizontal sticks (6) and six vertical sticks (5).

4. A sound barrier (7) according to Claim 1 **characterized by** comprising,
• 0.890-0.910 kg of the low-density polyethylene (LDPE) foam layer (4) with 2-5 mm-wide slits,
• 0.729-0.770 kg of the synthetic grass layer (3),
• the styrene butadiene rubber (SBR) granule panel (8) with two layers of SBR granule core layer (2) and the waste carbon fiber mesh (1) sandwiched between two SBR granule core layers (2), wherein the SBR granule panel (8) is placed between the LDPE foam layer (4) and the synthetic grass layer (3),
wherein the SBR granule core layer (2) comprises of 49.799-53.001 kg of SBR granule with the diameter size of 1.0 - 4.0 mm obtained from end-of-life tires (ELT), 2.650-2.750 kg of isocyanate as binder, 0.430-0.480 kg of tris(1-chloro-2-propyl) phosphate (TCPP) as fire-retardant, 0.013-0.017 kg of monoethylene glycol (MEG) as catalyst,
wherein 3.149-3.270 kg of waste carbon fiber mesh (1) is a rectangular mesh with seven horizontal sticks (6) in which there are double horizontal sticks (6) on each horizontal sides of the waste carbon fiber mesh (1) and between the double horizontal sticks (6) there are three horizontal sticks (6) and six vertical sticks (5).

5. A sound barrier (7) according to Claim 1 **characterized by** comprising,
• 2.179-2.220 kg of the LDPE foam layer (4) covered with synthetic grass with 2-5 mm-wide slits, as a foam layer,
• 0.730-0.770 kg of the synthetic grass layer (3),
• the styrene butadiene rubber (SBR) granule panel (8) with two layers of SBR granule core layer (2) and the waste carbon fiber mesh (1) sandwiched between two SBR granule core layers (2), wherein the SBR granule panel (8) is placed between the LDPE foam layer (4) and the synthetic grass layer (3),
wherein the SBR granule core layer (2) comprises of 49.799-53.001 kg of SBR granule with the diameter size of 1.0 - 4.0 mm obtained from end-of-life tires (ELT), 2.650-2.750 kg of isocyanate as binder, 0.430-0.480 kg of tris(1-chloro-2-propyl) phosphate (TCPP) as fire-retardant, 0.013-0.017 kg of monoethylene glycol (MEG) as catalyst,
wherein 3.150-3.270 kg of waste carbon fiber mesh (1) is a rectangular mesh with seven horizontal sticks (6) in which there are double horizontal sticks (6) on each horizontal sides of the waste carbon fiber mesh (1) and between the double horizontal sticks (6) there are three horizontal sticks (6) and six vertical sticks (5).

6. A sound barrier (7) according to Claim 1 **characterized by** comprising,
• 0.910 kg of the low-density polyethylene (LDPE) foam layer (4) with 2-5 mm-wide slits, as a foam layer,
• 0.770 kg of the synthetic grass layer (3),
• the styrene butadiene rubber (SBR) granule panel (8) with two layers of SBR granule core layer (2) and the waste carbon fiber mesh (1) sandwiched between two SBR granule core layers (2), wherein the SBR granule panel (8) is placed between the LDPE foam layer (4) and the synthetic grass layer (3),
wherein SBR granule core layer (2) comprises of 53.001 kg of SBR granule with the diameter size of 1.0 - 4.0 mm obtained from end-of-life tires (ELT), 2.750 kg of isocyanate as binder, 0.480 kg of tris(1-chloro-2-propyl) phosphate (TCPP) as fire-retardant, 0.017 kg of monoethylene glycol (MEG) as catalyst,
wherein 3.270 kg of the waste carbon fiber mesh (1) is a rectangular mesh with seven horizontal sticks (6) in which there are double horizontal sticks (6) on each horizontal sides of the waste carbon fiber mesh (1) and between the double horizontal sticks (6) there are three horizontal sticks (6) and six vertical sticks (5).

7. A sound barrier (7) according to Claim 1 **characterized by** comprising,
• 2.220 kg of the LDPE foam layer (4) covered with synthetic grass with 2-5 mm-wide slits, as a foam layer,
• 0.770 kg of the synthetic grass layer (3),
• the styrene butadiene rubber (SBR) granule panel (8) with two layers of SBR granule core layer (2) and the waste carbon fiber mesh (1) sandwiched between two SBR granule core layers (2), wherein the SBR granule panel (8) is placed between the LDPE foam layer (4) and the synthetic grass layer (3),
wherein the SBR granule core layer (2) comprises of 53.001 kg of SBR granule with the diameter size of 1.0 - 4.0 mm obtained from end-of-life tires (ELT), 2.750 kg of isocyanate as binder, 0.480 kg of tris(1-chloro-2-propyl) phosphate (TCPP) as fire-retardant, 0.017 kg of monoethylene glycol (MEG) as catalyst,
wherein 3.270 kg of waste carbon fiber mesh (1) is a rectangular mesh with seven horizontal sticks (6) in which there are double horizontal sticks (6) on each horizontal sides of the waste carbon fiber mesh (1) and between the double horizontal sticks (6) there are three horizontal sticks (6) and six vertical sticks (5).

8. A sound barrier (7) according to any of the preceding claims, **characterized in that** the sound barrier (7) has the measurements of 200-500 cm in length, 100 cm or 50 cm in height and 8 cm in width.

9. A sound barrier (7) according to any of the preceding claims, **characterized in that** in case of the foam layer is the LDPE foam layer (4), the LDPE foam layer (4) has a thickness of 40 mm.

10. A production method of a sound barrier (7) comprising the process steps of;
i. weighing of styrene butadiene rubber (SBR) granule parts obtained from the recycling of 1.0 - 4.0 mm end-of-life tires (ELT),
ii. transferring the prepared SBR granules to the mixer,
iii. adding isocyanate as binder, monoethylene glycol (MEG) as catalyst and tris(1-chloro-2-propyl) phosphate (TCPP) as fire-retardant and water to a vertical mixer,
iv. mixing all the materials added to a vertical mixer to form a homogeneous mixture,
v. transferring more than half of the prepared mixture to molds without losing time and performing gauging process to the mixture transferred to molds,
vi. placing a waste carbon fiber mesh (1), wherein the waste carbon fiber mesh (1) is a rectangular mesh with seven horizontal sticks (6) in which there are double horizontal sticks (6) on each horizontal sides of the waste carbon fiber mesh (1) and between the double horizontal sticks (6) there are three horizontal sticks (6) and six vertical sticks (5), into molds and transferring the remaining of the prepared mixture to molds, hence preparing a SBR granule panel (8),
vii. laying and performing molding process to the SBR granule panel (8), by pressing with pressure, 133°C of upper temperature and 128°C lower temperature,
viii. cooling after the pressing,
ix. gluing a low-density polyethylene (LDPE) foam layer (4) with no slits on one side of the SBR granule panel (8) and cutting 2-5 mm-wide slits or a LDPE foam layer (4) with no slits and weaving or gluing synthetic grass to the LDPE foam layer (4) with no slits and cutting 2-5 mm-wide slits,
x. gluing a synthetic grass layer (3) into the other side of the SBR granule panel (8),
xi. storing the obtained product after cooling.

11. A production method of the sound barrier (7) according to Claim 10, comprising the process steps of;
i. weighing of styrene butadiene rubber (SBR) granule parts obtained from the recycling of 1.0 - 4.0 mm end-of-life tires (ELT),
ii. transferring the prepared SBR granules to the mixer,
iii. adding isocyanate as binder, monoethylene glycol (MEG) as catalyst and tris(1-chloro-2-propyl) phosphate (TCPP) as fire-retardant and water to a vertical mixer,
iv. mixing all the materials added to a vertical mixer to form a homogeneous mixture,
v. transferring more than half of the prepared mixture to molds without losing time and performing the performing gauging process to the mixture transferred to molds,
vi. placing the waste carbon fiber mesh (1), wherein the waste carbon fiber mesh (1) is a rectangular mesh with seven horizontal sticks (6) in which there are double horizontal sticks (6) on each horizontal sides of the waste carbon fiber mesh (1) and between the double horizontal sticks (6) there are three horizontal sticks (6) and six vertical sticks (5), into molds and transferring the remaining of the prepared mixture to molds, hence preparing the SBR granule panel (8),
vii. laying and performing molding process to the SBR granule panel (8), pressing with pressure, upper 133°C of upper temperature and 128°C lower temperature,
viii. cooling after the pressing,
ix. gluing the low-density polyethylene (LDPE) foam layer (4) with no slits on one side of the SBR granule panel (8),
x. weaving or gluing synthetic grass to the LDPE foam layer (4) with no slits and cutting 2-5 mm-wide slits,
xi. gluing the synthetic grass layer (3) into the other side of the SBR granule panel (8),
xii. storing the obtained product after cooling.

12. A production method of the sound barrier (7) according to Claim 10, comprising the process steps of;
i. weighing of styrene butadiene rubber (SBR) granule parts obtained from the recycling of 1.0 - 4.0 mm end-of-life tires (ELT),
ii. transferring the prepared SBR granules to the mixer,
iii. adding isocyanate as binder, monoethylene glycol (MEG) as catalyst and tris(1-chloro-2-propyl) phosphate (TCPP) as fire-retardant and water to a vertical mixer,
iv. mixing all the materials added to a vertical mixer to form a homogeneous mixture,
v. transferring more than half of the prepared mixture to molds without losing time and performing gauging process to the mixture transferred to molds,
vi. placing a waste carbon fiber mesh (1), wherein the waste carbon fiber mesh (1) is a rectangular mesh with seven horizontal sticks (6) in which there are double horizontal sticks (6) on each horizontal sides of the waste carbon fiber mesh (1) and between the double horizontal sticks (6) there are three horizontal sticks (6) and six vertical sticks (5), into molds and transferring the remaining of the prepared mixture to molds, hence preparing a SBR granule panel (8),
vii. laying and performing molding process to the SBR granule panel (8), by pressing with pressure, 133°C of upper temperature and 128°C lower temperature,
viii. cooling after the pressing,
ix. gluing a low-density polyethylene (LDPE) foam layer (4) with no slits on one side of the SBR granule panel (8) and cutting 2-5 mm-wide slits,
x. gluing a synthetic grass layer (3) into the other side of the SBR granule panel (8),
xi. storing the obtained product after cooling.

13. A production method of the sound barrier (7) according to Claim 10 **characterized by** comprising;
i. weighing 84.331-84.642% of styrene butadiene rubber (SBR) granule parts by mass, obtained from the recycling of 1.0 - 4.0 mm end-of-life tires (ELT),
ii. transferring the prepared SBR granules to the mixer,
iii. adding 4.392-4.487% of isocyanate as binder by mass, 0.02201-0.02715% of monoethylene glycol (MEG) as catalyst by mass, 0.728-0.767% of tris(1-chloro-2-propyl) phosphate (TCPP) as fire-retardant by mass and 0.169-0.176% water by mass, to a vertical mixer,
iv. mixing all the materials added to a vertical mixer for 3 minutes to form a homogeneous mixture,
v. transferring 60% of the prepared mixture to molds without losing time and performing the performing gauging process to the mixture transferred to molds,
vi. placing 5.223-5.334% of the waste carbon fiber mesh (1) by mass, wherein the waste carbon fiber mesh (1) is a rectangular mesh with seven horizontal sticks (6) in which there are double horizontal sticks (6) on each horizontal sides of the waste carbon fiber mesh (1) and between the double horizontal sticks (6) there are three horizontal sticks (6) and six vertical sticks (5), into molds and transferring the remaining 40% of the prepared mixture to molds, hence preparing the SBR granule panel (8),
vii. laying in 1 minute and performing molding process to the SBR granule panel (8), by pressing for 20 minutes with pressure of 200 bar, 133°C of upper temperature and 128°C lower temperature,
viii. cooling for half a day after the pressing,
ix. gluing 1.454-1.507% of the low-density polyethylene (LDPE) foam layer (4) with no slits by mass, on one side of the SBR granule panel (8) and cutting 2-5 mm-wide slits,
x. gluing 1.230-1.236% of the synthetic grass layer (3) by mass, into the other side of the SBR panel (8),
xi. storing the obtained product after cooling.

14. A production method of the sound barrier (7) according to Claim 10 **characterized by** comprising;
i. weighing 84.331-84.642% of styrene butadiene rubber (SBR) granule parts by mass, obtained from the recycling of 1.0 - 4.0 mm end-of-life tires (ELT),
ii. transferring the prepared SBR granules to the mixer,
iii. adding 4.392-4.487% of isocyanate as binder by mass, 0.02201-0.02715% of monoethylene glycol (MEG) as catalyst by mass, 0.728-0.767% of tris(1-chloro-2-propyl) phosphate (TCPP) as fire-retardant by mass and 0.169-0.176% water by mass, to a vertical mixer,
iv. mixing all the materials added to a vertical mixer for 3 minutes to form a homogeneous mixture,
v. transferring 60% of the prepared mixture to molds without losing time and performing the performing gauging process to the mixture transferred to molds,
vi. placing 5.223-5.334% of the waste carbon fiber mesh (1) by mass, wherein the waste carbon fiber mesh (1) is a rectangular mesh with seven horizontal sticks (6) in which there are double horizontal sticks (6) on each horizontal sides of the waste carbon fiber mesh (1) and between the double horizontal sticks (6) there are three horizontal sticks (6) and six vertical sticks (5), into molds and transferring the remaining 40% of the prepared mixture to molds, hence preparing the SBR granule panel (8),
vii. laying in 1 minute and performing molding to the SBR granule panel (8), by pressing for 20 minutes with pressure of 200 bar, 133°C of upper temperature and 128°C lower temperature,
viii. cooling for half a day after the pressing,
ix. gluing 3.546-3.691% of the low-density polyethylene (LDPE) foam layer (4) with no slits by mass, on one side of the SBR granule panel (8),
x. weaving or gluing synthetic grass to the LDPE foam layer (4) with no slits and cutting 2-5 mm-wide slits,
xi. gluing 1.230-1.236% of the synthetic grass layer (3) by mass, into the other side of the SBR granule panel (8),
xii. storing the obtained product after cooling.

15. A production method of the sound barrier (7) according to Claim 10 **characterized by** comprising;
i. weighing 49.799-53.001 kg of styrene butadiene rubber (SBR) granule parts obtained from the recycling of 1.0 - 4.0 mm end-of-life tires (ELT),
ii. transferring the prepared SBR granules to the mixer,
iii. adding 2.650-2.750 kg of isocyanate as binder, 0.013-0.017 kg of monoethylene glycol (MEG) as catalyst and 0.430-0.480 kg of tris(1-chloro-2-propyl) phosphate (TCPP) as fire-retardant and 0.100-0.110 kg of water to a vertical mixer,
iv. mixing all the materials added to a vertical mixer for 3 minutes to form a homogeneous mixture,
v. transferring 60% of the prepared mixture to molds without losing time and performing the performing gauging process to the mixture transferred to molds,
vi. placing 3.150-3.271 kg of the waste carbon fiber mesh (1), wherein the waste carbon fiber mesh (1) is a rectangular mesh with seven horizontal sticks (6) in which there are double horizontal sticks (6) on each horizontal sides of the waste carbon fiber mesh (1) and between the double horizontal sticks (6) there are three horizontal sticks (6) and six vertical sticks (5), into molds and transferring the remaining 40% of the prepared mixture to molds, hence preparing the SBR granule panel (8),
vii. laying in 1 minute and performing molding process to the SBR granule panel (8), by pressing for 20 minutes with pressure of 200 bar, 133°C of upper temperature and 128°C lower temperature,
viii. cooling for half a day after the pressing,
ix. gluing 0.890-0.910 kg of the low-density polyethylene (LDPE) foam layer (4) with no slits on one side of the SBR granule panel (8) and cutting 2-5 mm-wide slits,
x. gluing 0.730-0.770 kg of the synthetic grass layer (3) into the other side of the SBR panel (8),
xi. storing the obtained product after cooling.

16. A production method of the sound barrier (7) according to Claim 10 **characterized by** comprising;
i. weighing 49.799-53.001 kg of styrene butadiene rubber (SBR) granule parts obtained from the recycling of 1.0 - 4.0 mm end-of-life tires (ELT),
ii. transferring the prepared SBR granules to the mixer,
iii. adding 2.650-2.750 kg of isocyanate as binder, 0.013-0.017 kg of monoethylene glycol (MEG) as catalyst by mass and 0.430-0.480 kg of tris(1-chloro-2-propyl) phosphate (TCPP) as fire-retardant and 0.100-0.110 kg of water to a vertical mixer,
iv. mixing all the materials added to a vertical mixer for 3 minutes to form a homogeneous mixture,
v. transferring 60% of the prepared mixture to molds without losing time and performing the performing gauging process to the mixture transferred to molds,
vi. placing 3.150-3.271 kg of the waste carbon fiber mesh (1), wherein the waste carbon fiber mesh (1) is a rectangular mesh with seven horizontal sticks (6) in which there are double horizontal sticks (6) on each horizontal sides of the waste carbon fiber mesh (1) and between the double horizontal sticks (6) there are three horizontal sticks (6) and six vertical sticks (5), into molds and transferring the remaining 40% of the prepared mixture to molds, hence preparing the SBR granule panel (8),
vii. laying within 1 minute and performing molding process to the SBR granule panel (8), by pressing for 20 minutes with pressure of 200 bar, 133°C of upper temperature and 128°C lower temperature,
viii. cooling for half a day after the pressing,
ix. gluing 2.180-2.220 kg of the low-density polyethylene (LDPE) foam layer (4) with no slits, on one side of the SBR granule panel (8),
x. weaving or gluing synthetic grass to the LDPE foam layer (4) and cutting 2-5 mm-wide slits,
xi. gluing 0.730-0.770 kg of the synthetic grass layer (3) into the other side of the SBR granule panel (8),
xii. storing the obtained product after cooling.

17. A production method of the sound barrier (7) according to Claim 10 **characterized by** comprising;
i. weighing 53.001 kg of styrene butadiene rubber (SBR) granule parts obtained from the recycling of 1.0 - 4.0 mm end-of-life tires (ELT),
ii. transferring the prepared SBR granules to the mixer,
iii. adding 2.750 kg of isocyanate as binder, 0.017 kg of monoethylene glycol (MEG) as catalyst and 0.480 kg of tris(1-chloro-2-propyl) phosphate (TCPP) as fire-retardant and 0.110 kg of water to a vertical mixer,
iv. mixing all the materials added to a vertical mixer for 3 minutes to form a homogeneous mixture,
v. transferring 60% of the prepared mixture to molds without losing time and performing the performing gauging process to the mixture transferred to molds,
vi. placing 3.271 kg of the waste carbon fiber mesh (1), wherein the waste carbon fiber mesh (1) is a rectangular mesh with seven horizontal sticks (6) in which there are double horizontal sticks (6) on each horizontal sides of the waste carbon fiber mesh (1) and between the double horizontal sticks (6) there are three horizontal sticks (6) and six vertical sticks (5), into molds and transferring the remaining 40% of the prepared mixture to molds, hence preparing the SBR granule panel (8),
vii. laying within 1 minute and performing molding process to the SBR granule panel (8), by pressing for 20 minutes with pressure of 200 bar, 133°C of upper temperature and 128°C lower temperature,
viii. cooling for half a day after the pressing,
ix. gluing 0.910 kg of the low-density polyethylene (LDPE) foam layer (4) with no slits on one side of the SBR granule panel (8) and cutting 2-5 mm-wide slits,
x. gluing 0.770 kg of the synthetic grass layer (3) into the other side of the SBR panel (8),
xi. storing the obtained product after cooling.

18. A production method of the sound barrier (7) according to Claim 10 **characterized by** comprising;
i. weighing 53.001 kg of styrene butadiene rubber (SBR) granule parts obtained from the recycling of 1.0 - 4.0 mm end-of-life tires (ELT),
ii. transferring the prepared SBR granules to the mixer,
iii. adding 2.750 kg of isocyanate as binder, 0.017 kg of monoethylene glycol (MEG) as catalyst by mass and 0.480 kg of tris(1-chloro-2-propyl) phosphate (TCPP) as fire-retardant and 0.110 kg of water to a vertical mixer,
iv. mixing all the materials added to a vertical mixer for 3 minutes to form a homogeneous mixture,
v. transferring 60% of the prepared mixture to molds without losing time and performing the performing gauging process to the mixture transferred to molds,
vi. placing 3.271 kg of the waste carbon fiber mesh (1), wherein the waste carbon fiber mesh (1) is a rectangular mesh with seven horizontal sticks (6) in which there are double horizontal sticks (6) on each horizontal sides of the waste carbon fiber mesh (1) and between the double horizontal sticks (6) there are three horizontal sticks (6) and six vertical sticks (5), into molds and transferring the remaining 40% of the prepared mixture to molds, hence preparing the SBR granule panel (8),
vii. laying within 1 minute and performing molding process to the SBR granule panel (8), by pressing for 20 minutes with pressure of 200 bar, 133°C of upper temperature and 128°C lower temperature,
viii. cooling for half a day after the pressing,
ix. gluing 2.220 kg of the low-density polyethylene (LDPE) foam layer (4) with no slits, on one side of the SBR granule panel (8),
x. weaving or gluing synthetic grass to the LDPE foam layer (4) and cutting 2-5 mm-wide slits,
xi. gluing 0.770 kg of the synthetic grass layer (3) into the other side of the SBR granule panel (8),
xii. storing the obtained product after cooling.

19. A sound barrier (7) obtained with the production method according to any one of the Claims 10-18.

20. A sound barrier (7) according to Claim 19, **characterized in that** the sound barrier (7) has the measurements of 200-500 cm in length, 100 cm or 50 cm in height and 8 cm in width.

## Patentansprüche

1. Eine Schallschutzwand (7) mit hoher Schallabsorptionsfähigkeit, **dadurch gekennzeichnet, dass** sie Folgendes umfasst:
• eine Schaumschicht (4) aus Polyethylen niedriger Dichte (LDPE) mit 2-5 mm breiten Schlitzen oder eine mit Kunstrasen bedeckte LDPE-Schaumschicht (4) mit 2-5 mm breiten Schlitzen als Schaumschicht,
• eine Kunstrasenschicht (3),
• eine Platte aus Styrol-Butadien-Kautschuk-Granulat (SBR) (8) mit zwei Schichten aus SBR-Granulat-Kernschichten (2) und einem Netz aus Kohlenstofffaser-Abfall (1), das zwischen zwei SBR-Granulat-Kernschichten (2) eingelegt ist, wobei die SBR-Granulat-Platte (8) zwischen der LDPE-Schaumschicht (4) und der Kunstrasenschicht (3) angeordnet ist,
wobei die SBR-Granulat-Kernschicht (2) aus SBR-Granulat mit einem Durchmesser von 1,0 bis 4,0 mm, das aus Altreifen (ELT) gewonnen wurde, Isocyanat als Bindemittel, Tris(1-chlor-2-propyl)phosphat (TCPP) als Flammschutzmittel und Monoethylenglykol (MEG) als Katalysator,
wobei das Carbonfaser-Abfallgewebe (1) ein rechteckiges Gewebe mit sieben horizontalen Stäben (6) ist, bei dem sich an jeder horizontalen Seite des Carbonfaser-Abfallgewebes (1) doppelte horizontale Stäbe (6) befinden und zwischen den doppelten horizontalen Stäben (6) drei horizontale Stäbe (6) und sechs vertikale Stäbe (5) angeordnet sind.

2. Eine Schallschutzwand (7) nach Anspruch 1, **dadurch gekennzeichnet, dass** sie, bezogen auf die Masse des Endprodukts, Folgendes umfasst:
• 1,543-1,488 % der Schaumschicht aus Polyethylen niedriger Dichte (LDPE) (4) mit 2-5 mm breiten Schlitzen,
• 1,259-1,265 % der Kunstrasenschicht (3),
• die Platte aus Styrol-Butadien-Kautschuk-Granulat (SBR) (8) mit zwei Schichten aus SBR-Granulat-Kernschicht (2) und dem Abfall-Kohlefasernetz (1), das zwischen zwei SBR-Granulat-Kernschichten (2) eingelegt ist, wobei die SBR-Granulat-Platte (8) zwischen der LDPE-Schaumschicht (4) und der Kunstrasenschicht (3) angeordnet ist,
wobei die SBR-Granulat-Kernschicht (2) bezogen auf die Masse des Endprodukts 86,363-86,606 % SBR-Granulat mit einer Korngröße von 1,0-4,0 mm umfasst, das aus Altreifen (ELT) gewonnen wurde, 4,494-4,595 % Isocyanat als Bindemittel, 0,745-0,785 % Tris(1-chlor-2-propyl)phosphat (TCPP) als Flammschutzmittel, 0,02254-0,02778 % Monoethylenglykol (MEG) als Katalysator,
wobei 5.344-5,462 % des Kohlenstofffaser-Abfallgewebes (1), bezogen auf die Masse des Endprodukts, ein rechteckiges Gewebe mit sieben horizontalen Stäben (6) sind, bei dem sich an jeder horizontalen Seite des Kohlenstofffaser-Abfallgewebes (1) doppelte horizontale Stäbe (6) befinden und zwischen den doppelten horizontalen Stäben (6) drei horizontale Stäbe (6) und sechs vertikale Stäbe (5) angeordnet sind.

3. Eine Schallschutzwand (7) nach Anspruch 1, **dadurch gekennzeichnet, dass** sie, bezogen auf die Masse des Endprodukts, Folgendes umfasst:
• 3,552-3,697 % der LDPE-Schaumschicht (4), die mit Kunstrasen mit 2-5 mm breiten Schlitzen bedeckt ist, als Schaumschicht,
• 1,232-1,238 % der Kunstrasenschicht (3),
• die Platte aus Styrol-Butadien-Kautschuk-Granulat (SBR) (8) mit zwei Schichten aus SBR-Granulat-Kernschicht (2) und dem Abfall-Kohlefasernetz (1), das zwischen zwei SBR-Granulat-Kernschichten (2) eingelegt ist, wobei die SBR-Granulat-Platte (8) zwischen der LDPE-Schaumschicht (4) und der Kunstrasenschicht (3) angeordnet ist,
wobei die SBR-Granulat-Kernschicht (2) bezogen auf die Masse des Endprodukts 84,474-84,791 % SBR-Granulat mit einer Korngröße von 1,0-4,0 mm, das aus Altreifen (ELT) gewonnen wurde, 4,400-4,495 % Isocyanat als Bindemittel, 0,729-0,768 % Tris(1-chlor-2-propyl)phosphat (TCPP) als Flammschutzmittel, 0,02205-0,02720 % Monoethylenglykol (MEG) als Katalysator,
wobei 5. 232-5,343 % des Kohlenstofffaser-Abfallgewebes (1), bezogen auf die Masse des Endprodukts, ein rechteckiges Gewebe mit sieben horizontalen Stäben (6) sind, wobei sich an jeder horizontalen Seite des Kohlenstofffaser-Abfallgewebes (1) doppelte horizontale Stäbe (6) befinden und zwischen den doppelten horizontalen Stäben (6) drei horizontale Stäbe (6) und sechs vertikale Stäbe (5) angeordnet sind.

4. Eine Schallschutzwand (7) gemäß Anspruch 1, **dadurch gekennzeichnet, dass** sie umfasst:
• 0,890-0,910 kg der Polyethylen-Schaumschicht (LDPE) (4) mit 2-5 mm breiten Schlitzen,
• 0,729-0,770 kg der Kunstrasenschicht (3),
• die Styrol-Butadien-Kautschuk-Granulatplatte (8) mit zwei Schichten aus SBR-Granulat-Kernschicht (2) und dem Kohlefaser-Abfallgewebe (1), das zwischen zwei SBR-Granulat-Kernschichten (2) eingebettet ist, wobei die SBR-Granulatplatte (8) zwischen der LDPE-Schaumschicht (4) und der Kunstrasenschicht (3) angeordnet ist,
wobei die SBR-Granulat-Kernschicht (2) aus 49,799-53,001 kg SBR-Granulat mit einem Durchmesser von 1,0-4,0 mm besteht, das aus Altreifen (ELT) gewonnen wurde, 2,650-2,750 kg Isocyanat als Bindemittel, 0,430-0,480 kg Tris(1-chlor-2-propyl)phosphat (TCPP) als Flammschutzmittel, 0,013-0,017 kg Monoethylenglykol (MEG) als Katalysator,
wobei 3. 149-3,270 kg eines Kohlenstofffaser-Abfallgewebes (1) ein rechteckiges Gewebe mit sieben horizontalen Stäben (6) ist, bei dem sich an jeder horizontalen Seite des Kohlenstofffaser-Abfallgewebes (1) doppelte horizontale Stäbe (6) befinden und zwischen den doppelten horizontalen Stäben (6) drei horizontale Stäbe (6) und sechs vertikale Stäbe (5) angeordnet sind.

5. Eine Schallschutzwand (7) gemäß Anspruch 1, **dadurch gekennzeichnet, dass** sie umfasst:
• 2,179-2,220 kg der LDPE-Schaumschicht (4), die mit Kunstrasen mit 2-5 mm breiten Schlitzen als Schaumschicht bedeckt ist,
• 0,730-0,770 kg der Kunstrasenschicht (3),
• die Styrol-Butadien-Kautschuk (SBR)-Granulatplatte (8) mit zwei Schichten aus SBR-Granulat-Kernschicht (2) und dem Abfall-Kohlefasernetz (1), das zwischen zwei SBR-Granulat-Kernschichten (2) eingebettet ist, wobei die SBR-Granulatplatte (8) zwischen der LDPE-Schaumschicht (4) und der Kunstrasenschicht (3) angeordnet ist,
wobei die SBR-Granulat-Kernschicht (2) aus 49,799-53,001 kg SBR-Granulat mit einem Durchmesser von 1,0-4,0 mm besteht, das aus Altreifen (ELT) gewonnen wurde, 2,650-2,750 kg Isocyanat als Bindemittel, 0,430-0,480 kg Tris(1-chlor-2-propyl)phosphat (TCPP) als Flammschutzmittel, 0,013-0,017 kg Monoethylenglykol (MEG) als Katalysator,
wobei 3,150-3,270 kg des ausrangierten Kohlefasernetzes (1) ein rechteckiges Netz mit sieben horizontalen Stäben (6) sind, bei dem sich an jeder horizontalen Seite des ausrangierten Kohlefasernetzes (1) doppelte horizontale Stäbe (6) befinden und zwischen den doppelten horizontalen Stäben (6) drei horizontale Stäbe (6) und sechs vertikale Stäbe (5) angeordnet sind.

6. Eine Schallschutzwand (7) gemäß Anspruch 1, **dadurch gekennzeichnet, dass** sie umfasst:
• 0,910 kg der Schaumschicht (4) aus Polyethylen niedriger Dichte (LDPE) mit 2-5 mm breiten Schlitzen als Schaumschicht,
• 0,770 kg der Kunstrasenschicht (3),
• die Platte aus Styrol-Butadien-Kautschuk-Granulat (SBR) (8) mit zwei Schichten aus SBR-Granulat-Kernschicht (2) und dem Abfall-Kohlefasernetz (1), das zwischen zwei SBR-Granulat-Kernschichten (2) eingelegt ist, wobei die SBR-Granulat-Platte (8) zwischen der LDPE-Schaumschicht (4) und der Kunstrasenschicht (3) angeordnet ist,
wobei die SBR-Granulat-Kernschicht (2) aus 53,001 kg SBR-Granulat mit einem Durchmesser von 1,0 bis 4,0 mm besteht, das aus Altreifen (ELT) gewonnen wurde, 2,750 kg Isocyanat als Bindemittel, 0,480 kg Tris(1-chlor-2-propyl)phosphat (TCPP) als Flammschutzmittel, 0,017 kg Monoethylenglykol (MEG) als Katalysator,
wobei 3,270 kg des ausrangierten Kohlefasernetzes (1) ein rechteckiges Netz mit sieben horizontalen Stäben (6) sind, bei dem sich an jeder horizontalen Seite des ausrangierten Kohlefasernetzes (1) doppelte horizontale Stäbe (6) befinden und zwischen den doppelten horizontalen Stäben (6) drei horizontale Stäbe (6) und sechs vertikale Stäbe (5) angeordnet sind.

7. Eine Schallschutzwand (7) gemäß Anspruch 1, **dadurch gekennzeichnet, dass** sie umfasst:
• 2,220 kg der LDPE-Schaumschicht (4), die mit Kunstrasen mit 2-5 mm breiten Schlitzen als Schaumschicht bedeckt ist,
• 0,770 kg der Kunstrasenschicht (3),
• die Styrol-Butadien-Kautschuk (SBR)-Granulatplatte (8) mit zwei Schichten einer SBR-Granulat-Kernschicht (2) und dem Kohlefaser-Abfallgewebe (1), das zwischen zwei SBR-Granulat-Kernschichten (2) eingelegt ist, wobei die SBR-Granulatplatte (8) zwischen der LDPE-Schaumschicht (4) und der Kunstrasenschicht (3) angeordnet ist,
wobei die SBR-Granulat-Kernschicht (2) aus 53,001 kg SBR-Granulat mit einer Korngröße von 1,0 bis 4,0 mm besteht, das aus Altreifen (ELT) gewonnen wurde, 2,750 kg Isocyanat als Bindemittel, 0,480 kg Tris(1-chlor-2-propyl)phosphat (TCPP) als Flammschutzmittel, 0,017 kg Monoethylenglykol (MEG) als Katalysator,
wobei 3,270 kg des ausrangierten Kohlefasernetzes (1) ein rechteckiges Netz mit sieben horizontalen Stäben (6) sind, bei dem sich an jeder horizontalen Seite des ausrangierten Kohlefasernetzes (1) doppelte horizontale Stäbe (6) befinden und zwischen den doppelten horizontalen Stäben (6) drei horizontale Stäbe (6) und sechs vertikale Stäbe (5) angeordnet sind.

8. Eine Schallschutzwand (7) gemäß einem der vorstehenden Ansprüche, **dadurch gekennzeichnet, dass** die Schallschutzwand (7) folgende Abmessungen aufweist: 200-500 cm Länge, 100 cm oder 50 cm Höhe und 8 cm Breite.

9. Eine Schallschutzwand (7) gemäß einem der vorstehenden Ansprüche, **dadurch gekennzeichnet, dass**, falls es sich bei der Schaumschicht um die LDPE-Schaumschicht (4) handelt, die LDPE-Schaumschicht (4) eine Dicke von 40 mm aufweist.

10. Verfahren zur Herstellung einer Lärmschutzwand (7), umfassend die folgenden Verfahrensschritte:
i. Wiegen von Styrol-Butadien-Kautschuk (SBR)-Granulat, das aus dem Recycling von Altreifen (ELT) mit einer Korngröße von 1,0 bis 4,0 mm gewonnen wurde,
ii. das Einfüllen des vorbereiteten SBR-Granulats in den Mischer,
iii. Zugabe von Isocyanat als Bindemittel, Monoethylenglykol (MEG) als Katalysator und Tris(1-chlor-2-propyl)phosphat (TCPP) als Flammschutzmittel sowie Wasser in einen Vertikalmischer,
iv. alle hinzugefügten Materialien in einem Vertikalmischer vermischen, um eine homogene Mischung zu erhalten,
v. mehr als die Hälfte der vorbereiteten Mischung ohne Zeitverlust in Formen zu füllen und die in die Formen gefüllte Mischung zu dosieren,
vi. Einlegen eines Carbonfaser-Abfallgewebes (1), wobei das Carbonfaser-Abfallgewebe (1) ein rechteckiges Gewebe mit sieben horizontalen Stäben (6) ist, bei dem sich an jeder horizontalen Seite des Carbonfaser-Abfallgewebes (1) sowie zwischen den doppelten horizontalen Stäben (6) befinden sich drei horizontale Stäbe (6) und sechs vertikale Stäbe (5), in Formen und das Einfüllen der restlichen vorbereiteten Mischung in Formen, wodurch eine SBR-Granulatplatte (8) hergestellt wird,
vii. Durchführen des Formungsprozesses an der SBR-Granulatplatte (8) durch Pressen bei einer Oberflächentemperatur von 133 °C und einer Unterflächentemperatur von 128 °C,
viii. Abkühlung nach dem Pressen,
ix. Aufkleben einer LDPE-Schaumschicht (4) ohne Schlitze auf eine Seite der SBR-Granulatplatte (8) und Einschneiden von 2-5 mm breiten Schlitzen oder Aufbringen einer LDPE-Schaumschicht (4) ohne Schlitze und Einweben oder Aufkleben von Kunstrasen auf die LDPE-Schaumschicht (4) ohne Schlitze sowie Einschneiden von 2-5 mm breiten Schlitzen,
x. das Einkleben einer Kunstrasenschicht (3) auf die andere Seite der SBR-Granulatplatte (8),
xi. Lagerung des gewonnenen Produkts nach dem Abkühlen.

11. Verfahren zur Herstellung der Schallschutzwand (7) gemäß Anspruch 10, umfassend die folgenden Verfahrensschritte:
i. Wiegen von Styrol-Butadien-Kautschuk (SBR)-Granulat, das aus dem Recycling von Altreifen (ELT) mit einer Korngröße von 1,0 bis 4,0 mm gewonnen wurde,
ii. Überführung des vorbereiteten SBR-Granulats in den Mischer,
iii. Zugabe von Isocyanat als Bindemittel, Monoethylenglykol (MEG) als Katalysator und Tris(1-chlor-2-propyl)phosphat (TCPP) als Flammschutzmittel sowie Wasser in einen Vertikalmischer,
iv. Vermischen aller in den Vertikalmischer eingefüllten Materialien zu einer homogenen Mischung,
v. unverzügliches Einfüllen von mehr als der Hälfte der hergestellten Mischung in Formen und Durchführen des Dosiervorgangs an der in die Formen eingefüllten Mischung,
vi. Einlegen des Carbonfaser-Abfallgewebes (1), wobei das Carbonfaser-Abfallgewebe (1) ein rechteckiges Gewebe mit sieben horizontalen Stäben (6) ist, bei dem sich an jeder horizontalen Seite des Carbonfaser-Abfallgewebes (1) und zwischen den doppelten horizontalen Stäben (6) befinden sich drei horizontale Stäbe (6) und sechs vertikale Stäbe (5), in Formen einlegen und den Rest der vorbereiteten Mischung in Formen überführen, wodurch die SBR-Granulatplatte (8) hergestellt wird,
vii. die SBR-Granulatplatte (8) einlegen und den Formungsprozess durchführen, unter Druck pressen, bei einer oberen Temperatur von 133 °C und einer unteren Temperatur von 128 °C,
viii. Abkühlen nach dem Pressen,
ix. Aufkleben der LDPE-Schaumschicht (4) ohne Schlitze auf eine Seite der SBR-Granulatplatte (8),
x. Einweben oder Aufkleben von Kunstrasen auf die LDPE-Schaumschicht (4) ohne Schlitze und Schneiden von 2-5 mm breiten Schlitzen,
xi. Aufkleben der Kunstrasenschicht (3) auf die andere Seite der SBR-Granulatplatte (8),
xii. Lagern des erhaltenen Produkts nach dem Abkühlen.

12. Verfahren zur Herstellung der Schallschutzwand (7) gemäß Anspruch 10, umfassend die folgenden Verfahrensschritte:
i. Abwiegen von Styrol-Butadien-Kautschuk (SBR)-Granulat, das aus dem Recycling von Altreifen (ELT) mit einer Korngröße von 1,0-4,0 mm gewonnen wurde,
ii. Überführung des vorbereiteten SBR-Granulats in den Mischer,
iii. Zugabe von Isocyanat als Bindemittel, Monoethylenglykol (MEG) als Katalysator und Tris(1-chlor-2-propyl)phosphat (TCPP) als Flammschutzmittel sowie von Wasser in einen Vertikalmischer,
iv. Mischen aller in den Vertikalmischer eingefüllten Materialien zu einer homogenen Mischung,
v. zeitnahes Überführen von mehr als der Hälfte der hergestellten Mischung in Formen und Durchführen eines Kalibriervorgangs an der in die Formen überführten Mischung,
vi. Einlegen eines Kohlefaser-Abfallgewebes (1), wobei das Kohlefaser-Abfallgewebe (1) ein rechteckiges Gewebe mit sieben horizontalen Stäben (6) ist, bei dem sich an jeder horizontalen Seite des Kohlefaser-Abfallgewebes (1) und zwischen den doppelten horizontalen Stäben (6) befinden sich drei horizontale Stäbe (6) und sechs vertikale Stäbe (5), in Formen einlegen und den Rest der vorbereiteten Mischung in Formen überführen, wodurch eine SBR-Granulatplatte (8) hergestellt wird,
vii. Verlegen und Durchführen des Formprozesses an der SBR-Granulatplatte (8) durch Pressen mit einem Druck, einer Oberflächentemperatur von 133 °C und einer Unterflächentemperatur von 128 °C,
viii. Abkühlen nach dem Pressen,
ix. Aufkleben einer Polyethylen-Schaumschicht (LDPE) (4) ohne Schlitze auf eine Seite der SBR-Granulatplatte (8) und Schneiden von 2-5 mm breiten Schlitzen,
x. Aufkleben einer Kunstrasenschicht (3) auf die andere Seite der SBR-Granulatplatte (8),
xi. Lagern des erhaltenen Produkts nach dem Abkühlen.

13. Verfahren zur Herstellung der Schallschutzwand (7) gemäß Anspruch 10, **dadurch gekennzeichnet, dass** es Folgendes umfasst:
i. mit einem Massenanteil von 84,331-84,642 % an Styrol-Butadien-Kautschuk (SBR)-Granulat, das aus dem Recycling von Altreifen (ELT) mit einer Größe von 1,0-4,0 mm gewonnen wurde,
ii. das aufbereitete SBR-Granulat in den Mischer geben,
iii. 4,392-4,487 Massenprozent Isocyanat als Bindemittel sowie 0,02201-0,02715 Massenprozent Monoethylenglykol (MEG) als Katalysator (Massenanteil), 0,728-0,767 % Tris(1-chlor-2-propyl)phosphat (TCPP) als Flammschutzmittel (Massenanteil) und 0,169-0,176 % Wasser (Massenanteil) in einen Vertikalmischer geben,
iv. alle in den Vertikalmischer eingefüllten Materialien 3 Minuten lang mischen, um eine homogene Mischung zu erhalten,
v. 60 % der hergestellten Mischung unverzüglich in Formen überführen und den Dosiervorgang an der in die Formen überführten Mischung durchführen,
vi. Einbringen von 5,223-5,334 % des Abfall-Kohlefasernetzes (1) (Massenanteil), wobei das Abfall-Kohlefasernetz (1) ein rechteckiges Netz mit sieben horizontalen Stäben (6) ist, bei dem sich an jeder horizontalen Seite des Abfall-Kohlefasernetzes (1) und zwischen den doppelten horizontalen Stäben (6) befinden sich drei horizontale Stäbe (6) und sechs vertikale Stäbe (5), in Formen geben und die verbleibenden 40 % der vorbereiteten Mischung in Formen überführen, wodurch die SBR-Granulatplatte (8) hergestellt wird,
vii. Einlegen innerhalb von 1 Minute und Durchführen des Formprozesses für die SBR-Granulatplatte (8) durch 20-minütiges Pressen bei einem Druck von 200 bar, einer Oberflächentemperatur von 133 °C und einer Unterflächentemperatur von 128 °C,
viii. Abkühlen für einen halben Tag nach dem Pressen,
ix. Aufkleben von 1,454-1,507 % der geschlitzten Polyethylen-Schaumschicht (LDPE) (4) (bezogen auf die Masse) auf eine Seite der SBR-Granulatplatte (8) und Schneiden von 2-5 mm breiten Schlitzen,
x. Aufkleben der Kunstrasenschicht (3) mit einem Massenanteil von 1,230-1,236 % auf die andere Seite der SBR-Platte (8),
xi. Lagerung des erhaltenen Produkts nach dem Abkühlen.

14. Verfahren zur Herstellung der Schallschutzwand (7) gemäß Anspruch 10, **dadurch gekennzeichnet, dass** es Folgendes umfasst:
i. mit einem Massenanteil von 84,331-84,642 % an Styrol-Butadien-Kautschuk (SBR)-Granulat, das aus dem Recycling von Altreifen (ELT) mit einer Größe von 1,0-4,0 mm gewonnen wurde,
ii. das aufbereitete SBR-Granulat in den Mischer geben,
iii. 4,392-4,487 Massenprozent Isocyanat als Bindemittel sowie 0,02201-0,02715 Massenprozent Monoethylenglykol (MEG) als Katalysator (Massenanteil), 0,728-0,767 % Tris(1-chlor-2-propyl)phosphat (TCPP) als Flammschutzmittel (Massenanteil) und 0,169-0,176 % Wasser (Massenanteil) in einen Vertikalmischer,
iv. alle in den Vertikalmischer eingefüllten Materialien 3 Minuten lang mischen, um eine homogene Mischung zu erhalten,
v. 60 % der hergestellten Mischung unverzüglich in Formen überführen und den Dosiervorgang an der in die Formen überführten Mischung durchführen,
vi. Einbringen von 5,223-5,334 % des Abfall-Kohlefasernetzes (1) (Massenanteil), wobei das Abfall-Kohlefasernetz (1) ein rechteckiges Netz mit sieben horizontalen Stäben (6) ist, bei dem sich an jeder horizontalen Seite des Abfall-Kohlefasernetzes (1) und zwischen den doppelten horizontalen Stäben (6) befinden sich drei horizontale Stäbe (6) und sechs vertikale Stäbe (5), in Formen geben und die verbleibenden 40 % der vorbereiteten Mischung in Formen überführen, wodurch die SBR-Granulatplatte (8) hergestellt wird,
vii. Einlegen innerhalb von 1 Minute und Formen der SBR-Granulatplatte (8) durch 20-minütiges Pressen bei einem Druck von 200 bar, einer Oberflächentemperatur von 133 °C und einer Unterflächentemperatur von 128 °C,
viii. Abkühlen für einen halben Tag nach dem Pressen,
ix. Aufkleben von 3,546-3,691 % der LDPE-Schaumschicht (4) ohne Schlitze (bezogen auf die Masse) auf eine Seite der SBR-Granulatplatte (8),
x. Einweben oder Aufkleben von Kunstrasen auf die LDPE-Schaumschicht (4) ohne Schlitze und Schneiden von 2-5 mm breiten Schlitzen,
xi. Aufkleben von 1,230-1,236 % der Kunstrasenschicht (3) (bezogen auf die Masse) auf die andere Seite der SBR-Granulatplatte (8),
xii. Lagern des erhaltenen Produkts nach dem Abkühlen.

15. Verfahren zur Herstellung der Schallschutzwand (7) gemäß Anspruch 10, **dadurch gekennzeichnet, dass** es Folgendes umfasst:
i. 49,799-53,001 kg Styrol-Butadien-Kautschuk (SBR)-Granulat, das aus dem Recycling von Altreifen (ELT) mit einer Korngröße von 1,0-4,0 mm gewonnen wurde,
ii. das aufbereitete SBR-Granulat in den Mischer zu geben,
iii. Zugabe von 2,650-2,750 kg Isocyanat als Bindemittel, 0,013-0,017 kg Monoethylenglykol (MEG) als Katalysator sowie 0,430-0,480 kg Tris(1-chlor-2-propyl)phosphat (TCPP) als Flammschutzmittel und 0, 100-0,110 kg Wasser in einen Vertikalmischer geben,
iv. alle in den Vertikalmischer gegebenen Materialien 3 Minuten lang mischen, um eine homogene Mischung zu erhalten,
v. 60 % der hergestellten Mischung unverzüglich in Formen füllen und den Dosiervorgang an der in die Formen gefüllten Mischung durchführen,
vi. Einlegen von 3,150-3,271 kg des Carbonfaser-Abfallgewebes (1), wobei das Carbonfaser-Abfallgewebe (1) ein rechteckiges Gewebe mit sieben horizontalen Stäben (6) ist, bei dem sich an jeder horizontalen Seite des Carbonfaser-Abfallgewebes (1) und zwischen den doppelten horizontalen Stäben (6) befinden sich drei horizontale Stäbe (6) und sechs vertikale Stäbe (5), in Formen einlegen und die verbleibenden 40 % der vorbereiteten Mischung in Formen einfüllen, wodurch die SBR-Granulatplatte (8) hergestellt wird,
vii. Einlegen innerhalb von 1 Minute und Durchführen des Formprozesses an der SBR-Granulatplatte (8) durch 20-minütiges Pressen bei einem Druck von 200 bar, einer Oberflächentemperatur von 133 °C und einer Unterflächentemperatur von 128 °C,
viii. Abkühlen für einen halben Tag nach dem Pressen,
ix. Aufkleben von 0,890-0,910 kg der Polyethylen-Schaumschicht (LDPE) (4) ohne Schlitze auf eine Seite der SBR-Granulatplatte (8) und Schneiden von 2-5 mm breiten Schlitzen,
x. Aufkleben von 0,730-0,770 kg der Kunstrasenschicht (3) auf die andere Seite der SBR-Platte (8),
xi. Lagerung des erhaltenen Produkts nach dem Abkühlen.

16. Verfahren zur Herstellung der Schallschutzwand (7) gemäß Anspruch 10, **dadurch gekennzeichnet, dass** es Folgendes umfasst:
i. Abwiegen von 49,799-53,001 kg Styrol-Butadien-Kautschuk (SBR)-Granulat, das aus dem Recycling von Altreifen (ELT) mit einer Korngröße von 1,0-4,0 mm gewonnen wurde,
ii. Überführung des vorbereiteten SBR-Granulats in den Mischer,
iii. Zugabe von 2,650-2,750 kg Isocyanat als Bindemittel, 0,013-0,017 kg Monoethylenglykol (MEG) als Katalysator (bezogen auf die Masse) und 0,430-0,480 kg Tris(1-chlor-2-propyl)phosphat (TCPP) als Flammschutzmittel sowie 0,100-0,110 kg Wasser in einen Vertikalmischer,
iv. Mischen aller in den Vertikalmischer eingebrachten Materialien für 3 Minuten, um eine homogene Mischung zu bilden,
v. unverzügliches Einfüllen von 60 % der hergestellten Mischung in Formen und Durchführen des Kalibrierungsvorgangs an der in die Formen eingefüllten Mischung,
vi. Einlegen von 3,150-3,271 kg des ausrangierten Kohlefasernetzes (1), wobei das ausrangierte Kohlefasernetz (1) ein rechteckiges Netz mit sieben horizontalen Stäben (6) ist, bei dem sich an jeder horizontalen Seite des ausrangierten Kohlefasernetzes (1) sowie zwischen den doppelten horizontalen Stäben (6) befinden sich drei horizontale Stäbe (6) und sechs vertikale Stäbe (5), in Formen einlegen und die verbleibenden 40 % der vorbereiteten Mischung in Formen einfüllen, wodurch die SBR-Granulatplatte (8) hergestellt wird,
vii. innerhalb von 1 Minute einlegen und den Formungsprozess an der SBR-Granulatplatte (8) durchführen, indem 20 Minuten lang mit einem Druck von 200 bar, einer oberen Temperatur von 133 °C und einer unteren Temperatur von 128 °C gepresst wird,
viii. Abkühlen für einen halben Tag nach dem Pressen,
ix. Aufkleben von 2,180-2,220 kg der geschlitzten Polyethylen-Schaumschicht (LDPE) (4) auf eine Seite der SBR-Granulatplatte (8),
x. Einweben oder Aufkleben von Kunstrasen auf die LDPE-Schaumschicht (4) und Schneiden von 2-5 mm breiten Schlitzen,
xi. Aufkleben von 0,730-0,770 kg der Kunstrasenschicht (3) auf die andere Seite der SBR-Granulatplatte (8),
xii. Lagerung des erhaltenen Produkts nach dem Abkühlen.

17. Verfahren zur Herstellung der Schallschutzwand (7) gemäß Anspruch 10, **dadurch gekennzeichnet, dass** es Folgendes umfasst:
i. Abwiegen von 53,001 kg Styrol-Butadien-Kautschuk (SBR)-Granulat, das aus dem Recycling von Altreifen (ELT) mit einer Korngröße von 1,0-4,0 mm gewonnen wurde,
ii. Einfüllen des vorbereiteten SBR-Granulats in den Mischer,
iii. Zugabe von 2,750 kg Isocyanat als Bindemittel, 0,017 kg Monoethylenglykol (MEG) als Katalysator sowie 0,480 kg Tris(1-chlor-2-propyl)phosphat (TCPP) als Flammschutzmittel und 0,110 kg Wasser in einen Vertikalmischer,
iv. Mischen aller in den Vertikalmischer eingefüllten Materialien für 3 Minuten, um eine homogene Mischung zu bilden,
v. unverzügliches Einfüllen von 60 % der hergestellten Mischung in Formen und Durchführen des Dosiervorgangs an der in die Formen eingefüllten Mischung,
vi. 3,271 kg des ausrangierten Kohlefasernetzes (1) in die Formen legen, wobei das ausrangierte Kohlefasernetz (1) ein rechteckiges Netz mit sieben horizontalen Stäben (6) ist, bei dem sich an jeder horizontalen Seite des ausrangierten Kohlefasernetzes (1) und zwischen den doppelten horizontalen Stäben (6) befinden sich drei horizontale Stäbe (6) und sechs vertikale Stäbe (5), in Formen einlegen und die restlichen 40 % der vorbereiteten Mischung in Formen überführen, wodurch die SBR-Granulatplatte (8) hergestellt wird,
vii. innerhalb von 1 Minute Einlegen und Durchführen des Formprozesses für die SBR-Granulatplatte (8) durch 20-minütiges Pressen bei einem Druck von 200 bar, einer Oberflächentemperatur von 133 °C und einer Unterflächentemperatur von 128 °C,
viii. Abkühlen für einen halben Tag nach dem Pressen,
ix. Aufkleben von 0,910 kg der Polyethylen-Schaumschicht (LDPE) (4) ohne Schlitze auf eine Seite der SBR-Granulatplatte (8) und Schneiden von 2-5 mm breiten Schlitzen,
x. Aufkleben von 0,770 kg der Kunstrasenschicht (3) auf die andere Seite der SBR-Platte (8),
xi. Lagern des erhaltenen Produkts nach dem Abkühlen.

18. Verfahren zur Herstellung der Schallschutzwand (7) gemäß Anspruch 10, **dadurch gekennzeichnet, dass** es Folgendes umfasst:
i. Abwiegen von 53,001 kg Styrol-Butadien-Kautschuk (SBR)-Granulat, das aus dem Recycling von Altreifen (ELT) mit einer Korngröße von 1,0-4,0 mm gewonnen wurde,
ii. Einfüllen des vorbereiteten SBR-Granulats in den Mischer,
iii. Zugabe von 2,750 kg Isocyanat als Bindemittel, 0,017 kg Monoethylenglykol (MEG) als Katalysator (bezogen auf die Masse) sowie 0,480 kg Tris(1-chlor-2-propyl)phosphat (TCPP) als Flammschutzmittel und 0,110 kg Wasser in einen Vertikalmischer,
iv. Mischen aller in den Vertikalmischer eingefüllten Materialien für 3 Minuten, um eine homogene Mischung zu bilden,
v. unverzügliches Einfüllen von 60 % der hergestellten Mischung in Formen und Durchführen des Dosiervorgangs an der in die Formen eingefüllten Mischung,
vi. 3,271 kg des ausrangierten Kohlefasernetzes (1) einlegen, wobei das ausrangierte Kohlefasernetz (1) ein rechteckiges Netz mit sieben horizontalen Stäben (6) ist, bei dem sich an jeder horizontalen Seite des ausrangierten Kohlefasernetzes (1) und zwischen den doppelten horizontalen Stäben (6) befinden sich drei horizontale Stäbe (6) und sechs vertikale Stäbe (5), in Formen einlegen und die restlichen 40 % der vorbereiteten Mischung in Formen überführen, wodurch die SBR-Granulatplatte (8) hergestellt wird,
vii. innerhalb von 1 Minute einlegen und den Formungsprozess an der SBR-Granulatplatte (8) durchführen, indem 20 Minuten lang mit einem Druck von 200 bar, einer oberen Temperatur von 133 °C und einer unteren Temperatur von 128 °C gepresst wird,
viii. Abkühlen für einen halben Tag nach dem Pressen,
ix. Aufkleben von 2,220 kg der geschlitzten Polyethylen-Schaumschicht (LDPE) (4) auf eine Seite der SBR-Granulatplatte (8),
x. Einweben oder Aufkleben von Kunstrasen auf die LDPE-Schaumschicht (4) und Schneiden von 2-5 mm breiten Schlitzen,
xi. Aufkleben von 0,770 kg der Kunstrasenschicht (3) auf die andere Seite der SBR-Granulatplatte (8),
xii. Lagerung des erhaltenen Produkts nach dem Abkühlen.

19. Eine Schallschutzwand (7), die nach dem Herstellungsverfahren gemäß einem der Ansprüche 10 bis 18 hergestellt wurde.

20. Eine Schallschutzwand (7) gemäß Anspruch 19, **dadurch gekennzeichnet, dass** die Schallschutzwand (7) folgende Abmessungen aufweist: 200-500 cm Länge, 100 cm oder 50 cm Höhe und 8 cm Breite.

## Revendications

1. Barrière acoustique (7) présentant une grande capacité d'absorption acoustique, **caractérisée en ce qu'**elle comprend :
• une couche de mousse de polyéthylène basse densité (PEBD) (4) comportant des fentes de 2 à 5 mm de largeur, ou une couche de mousse de PEBD (4) recouverte de gazon synthétique comportant des fentes de 2 à 5 mm de largeur, en tant que couche de mousse,
• une couche de gazon synthétique (3),
• un panneau en granulés de caoutchouc styrène-butadiène (SBR) (8) composé de deux couches centrales en granulés de SBR (2) et d'un treillis en fibres de carbone de recyclées (1) pris en sandwich entre ces deux couches centrales en granulés de SBR (2), le panneau en granulés de SBR (8) étant placé entre la couche de mousse de PEBD (4) et la couche de gazon synthétique (3),
dans laquelle la couche centrale (2) constituée de granulés de SBR comprend des granulés de SBR d'un diamètre compris entre 1,0 et 4,0 mm issus de pneus en fin de vie (ELT), de l'isocyanate comme liant, du phosphate de tris(1-chloro-2-propyle) (TCPP) comme retardateur de flamme, du monoéthylène glycol (MEG) comme catalyseur,
dans laquelle le treillis en fibre de carbone de recyclées (1) est un treillis rectangulaire comportant sept barres horizontales (6), avec une double barre horizontale (6) de chaque côté du treillis en fibre de carbone de recyclées (1) et, entre ces doubles barres horizontales (6), trois barres horizontales (6) et six barres verticales (5).

2. Barrière acoustique (7) selon la revendication 1, **caractérisée en ce qu'**elle comprend, en masse par rapport au produit fini ;
• 1,543 à 1,488 % de la couche de mousse de polyéthylène basse densité (PEBD) (4) comportant des fentes de 2 à 5 mm de largeur,
• 1,259 à 1,265 % de la couche de gazon synthétique (3),
• le panneau en granulés de caoutchouc styrène-butadiène (SBR) (8) comprenant deux couches de noyau en granulés de SBR (2) et un treillis en fibres de carbone recyclées (1) intercalé entre les deux couches de noyau en granulés de SBR (2), ledit panneau en granulés de SBR (8) étant disposé entre la couche de mousse en polyéthylène basse densité (PEBD) (4) et la couche de gazon synthétique (3),
dans laquelle la couche centrale de granulés de SBR (2) comprend, en masse par rapport au produit final, 86,363 à 86,606 % de granulés de SBR d'un diamètre compris entre 1,0 et 4,0 mm, obtenus à partir de pneus en fin de vie (ELT), 4,494 à 4,595 % d'isocyanate comme liant, 0,745 à 0,785 % de phosphate de tris(1-chloro-2-propyle) (TCPP) comme retardateur de flamme, 0,02254 à 0,02778 % de monoéthylène glycol (MEG) comme catalyseur,
dans laquelle 5,344 à 5,462 % de la maille de fibres de carbone de recyclées (1), en masse par rapport au produit final, est une maille rectangulaire comportant sept barres horizontales (6), dans laquelle on trouve des paires de barres horizontales (6) sur chacun des côtés horizontaux de la maille de fibres de carbone de recyclées (1) et, entre ces paires de barres horizontales (6), trois barres horizontales (6) et six barres verticales (5).

3. Barrière acoustique (7) selon la revendication 1, **caractérisée en ce qu'**elle comprend, en masse par rapport au produit fini :
• 3,552 à 3,697 % de la couche de mousse de PEBD (4) recouverte de gazon synthétique comportant des fentes de 2 à 5 mm de largeur, en tant que couche de mousse,
• 1,232 à 1,238 % de la couche de gazon synthétique (3),
• le panneau en granulés de caoutchouc styrène-butadiène (SBR) (8), composé de deux couches de granulés de SBR formant le noyau (2) et d'un treillis en fibres de carbone de recyclées (1) pris en sandwich entre ces deux couches de granulés de SBR formant le noyau (2), le panneau en granulés de SBR (8) étant placé entre la couche de mousse de PEBD (4) et la couche de gazon synthétique (3),
dans laquelle la couche centrale de granulés de SBR (2) comprend, en masse par rapport au produit final, 84,474 à 84,791 % de granulés de SBR d'un diamètre compris entre 1,0 et 4,0 mm, obtenus à partir de pneus en fin de vie (ELT), 4,400 à 4,495 % d'isocyanate comme liant, 0,729 à 0,768 % de phosphate de tris(1-chloro-2-propyle) (TCPP) comme retardateur de flamme, 0,02205 à 0,02720 % de monoéthylène glycol (MEG) comme catalyseur,
dans laquelle 5,232 à 5,343 % de la maille de fibres de carbone de recyclées (1), en masse par rapport au produit final, est une maille rectangulaire comportant sept barres horizontales (6), dans laquelle on trouve des paires de barres horizontales (6) sur chacun des côtés horizontaux de la maille de fibres de carbone de recyclées (1) et, entre ces paires de barres horizontales (6), trois barres horizontales (6) et six barres verticales (5).

4. Barrière acoustique (7) selon la revendication 1, **caractérisée en ce qu'**elle comprend :
• 0,890 à 0,910 kg de couche de mousse de polyéthylène basse densité (PEBD) (4) comportant des fentes de 2 à 5 mm de largeur,
• 0,729 à 0,770 kg de couche de gazon synthétique (3),
• le panneau en granulés de caoutchouc styrène-butadiène (SBR) (8), composé de deux couches de granulés de SBR formant le noyau (2) et d'un treillis en fibres de carbone de recyclées (1) pris en sandwich entre ces deux couches de granulés de SBR formant le noyau (2), le panneau en granulés de SBR (8) étant placé entre la couche de mousse de PEBD (4) et la couche de gazon synthétique (3),
dans laquelle la couche centrale (2) constituée de granulés de SBR comprend 49,799 à 53,001 kg de granulés de SBR d'un diamètre compris entre 1,0 et 4,0 mm, issus de pneus en fin de vie (ELT), 2,650 à 2,750 kg d'isocyanate comme liant, 0,430 à 0,480 kg de phosphate de tris(1-chloro-2-propyle) (TCPP) comme retardateur de flamme, 0,013 à 0,017 kg de monoéthylène glycol (MEG) comme catalyseur,
dans laquelle 3,149 à 3,270 kg de treillis en fibre de carbone de recyclées (1) constituent un treillis rectangulaire comportant sept barres horizontales (6), dans lequel on trouve des paires de barres horizontales (6) sur chacun des côtés horizontaux du treillis en fibre de carbone de recyclées (1) et, entre ces paires de barres horizontales (6), trois barres horizontales (6) et six barres verticales (5).

5. Barrière acoustique (7) selon la revendication 1, **caractérisée en ce qu'**elle comprend :
• 2,179 à 2,220 kg de couche de mousse de PEBD (4) recouverte de gazon synthétique comportant des fentes de 2 à 5 mm de largeur, en tant que couche de mousse,
• 0,730 à 0,770 kg de couche de gazon synthétique (3),
• le panneau en granulés de caoutchouc styrène-butadiène (SBR) (8), composé de deux couches de granulés de SBR formant le noyau (2) et d'un treillis en fibres de carbone de recyclées (1) pris en sandwich entre ces deux couches de granulés de SBR formant le noyau (2), le panneau en granulés de SBR (8) étant placé entre la couche de mousse de PEBD (4) et la couche de gazon synthétique (3),
dans laquelle la couche centrale (2) constituée de granulés de SBR comprend 49,799 à 53,001 kg de granulés de SBR d'un diamètre compris entre 1,0 et 4,0 mm, issus de pneus en fin de vie (ELT), 2,650 à 2,750 kg d'isocyanate comme liant, 0,430 à 0,480 kg de phosphate de tris(1-chloro-2-propyle) (TCPP) comme retardateur de flamme, 0,013 à 0,017 kg de monoéthylène glycol (MEG) comme catalyseur,
dans laquelle 3,150 à 3,270 kg de treillis en fibre de carbone de recyclées (1) constituent un treillis rectangulaire comportant sept barres horizontales (6), dans lequel on trouve des paires de barres horizontales (6) sur chacun des côtés horizontaux du treillis en fibre de carbone de recyclées (1) et, entre ces paires de barres horizontales (6), trois barres horizontales (6) et six barres verticales (5).

6. Barrière acoustique (7) selon la revendication 1, **caractérisée en ce qu'**elle comprend :
• 0,910 kg de couche de mousse de polyéthylène basse densité (PEBD) (4) comportant des fentes de 2 à 5 mm de largeur, en tant que couche de mousse,
• 0,770 kg de couche de gazon synthétique (3),
• le panneau en granulés de caoutchouc styrène-butadiène (SBR) (8), composé de deux couches de granulés de SBR formant le noyau (2) et d'un treillis en fibres de carbone de recyclées (1) pris en sandwich entre ces deux couches de granulés de SBR formant le noyau (2), le panneau en granulés de SBR (8) étant placé entre la couche de mousse de PEBD (4) et la couche de gazon synthétique (3),
dans laquelle la couche centrale (2) constituée de granulés de SBR comprend 53,001 kg de granulés de SBR d'un diamètre compris entre 1,0 et 4,0 mm, issus de pneus en fin de vie (ELT), 2,750 kg d'isocyanate comme liant, 0,480 kg de phosphate de tris(1-chloro-2-propyle) (TCPP) comme retardateur de flamme, 0,017 kg de monoéthylène glycol (MEG) comme catalyseur,
dans laquelle 3,270 kg de treillis en fibre de carbone de recyclées (1) constituent un treillis rectangulaire comportant sept barres horizontales (6), avec des paires de barres horizontales (6) situées de chaque côté du treillis en fibre de carbone de recyclées (1) et, entre ces paires de barres horizontales (6), trois barres horizontales (6) et six barres verticales (5).

7. Barrière acoustique (7) selon la revendication 1, **caractérisée en ce qu'**elle comprend :
• 2,220 kg de couche de mousse de LDPE (4) recouverte de gazon synthétique comportant des fentes de 2 à 5 mm de largeur, en tant que couche de mousse,
• 0,770 kg de couche de gazon synthétique (3),
• le panneau en granulés de caoutchouc styrène-butadiène (SBR) (8), composé de deux couches de granulés de SBR formant le noyau (2) et d'un treillis en fibres de carbone de recyclées (1) pris en sandwich entre ces deux couches de granulés de SBR formant le noyau (2), le panneau en granulés de SBR (8) étant placé entre la couche de mousse de PEBD (4) et la couche de gazon synthétique (3),
dans laquelle la couche centrale (2) constituée de granulés de SBR comprend 53,001 kg de granulés de SBR d'un diamètre compris entre 1,0 et 4,0 mm, issus de pneus en fin de vie (ELT), 2,750 kg d'isocyanate comme liant, 0,480 kg de phosphate de tris(1-chloro-2-propyle) (TCPP) comme retardateur de flamme, 0,017 kg de monoéthylène glycol (MEG) comme catalyseur,
dans laquelle 3,270 kg de treillis en fibre de carbone de recyclées (1) est un treillis rectangulaire comportant sept barres horizontales (6), dans lequel on trouve des paires de barres horizontales (6) sur chacun des côtés horizontaux du treillis en fibre de carbone de recyclées (1) et, entre ces paires de barres horizontales (6), trois barres horizontales (6) et six barres verticales (5).

8. Barrière acoustique (7) selon l'une quelconque des revendications précédentes, **caractérisée en ce que** la barrière acoustique (7) présente les dimensions de 200 à 500 cm de longueur, 100 cm ou 50 cm de hauteur et 8 cm de largeur.

9. Barrière acoustique (7) selon l'une quelconque des revendications précédentes, **caractérisée en ce que**, lorsque la couche de mousse est une couche de mousse de LDPE (4), cette couche de mousse de LDPE (4) présente une épaisseur de 40 mm.

10. Procédé de fabrication d'une barrière acoustique (7) comprenant les étapes suivantes :
i. pesage des granulés de caoutchouc styrène-butadiène (SBR) issus du recyclage de pneus en fin de vie (ELT) d'une taille comprise entre 1,0 et 4,0 mm,
ii. transfert des granulés de SBR préparés vers le mélangeur,
iii. ajout d'isocyanate comme liant, de monoéthylène glycol (MEG) comme catalyseur, de phosphate de tris(1-chloro-2-propyle) (TCPP) comme retardateur de flamme et d'eau dans un mélangeur vertical,
iv. mélange de tous les matériaux introduits dans un mélangeur vertical afin d'obtenir un mélange homogène,
v. transfert sans perdre de temps de plus de la moitié du mélange préparé dans des moules et réalisation du calibrage du mélange transféré dans les moules,
vi. placer un treillis en fibres de carbone recyclées (1), ledit treillis en fibres de carbone recyclées (1) étant un treillis rectangulaire comprenant sept tiges horizontales (6), dont deux paires de tiges horizontales (6) sont disposées respectivement sur chacun des côtés horizontaux du treillis, trois tiges horizontales (6) étant disposées entre lesdites paires de tiges horizontales (6), ainsi que six tiges verticales (5), dans les moules, puis transférer le reste du mélange préparé dans les moules, de manière à former un panneau en granulés de caoutchouc styrène-butadiène (SBR) (8),
vii. mise en place et réalisation du processus de moulage du panneau en granulés de SBR (8), par compression, à une température supérieure de 133 °C et une température inférieure de 128 °C,
viii. refroidissement après le pressage,
ix. collage d'une couche de mousse de polyéthylène basse densité (PEBD) (4) sans fentes sur l'une des faces du panneau en granulés de SBR (8) et découpe de fentes de 2 à 5 mm de largeur, ou d'une couche de mousse de PEBD (4) sans fentes, puis tissage ou collage de gazon synthétique sur la couche de mousse de PEBD (4) sans fentes et découpage de fentes de 2 à 5 mm de largeur,
x. collage d'une couche de gazon synthétique (3) sur l'autre face du panneau en granulés de SBR (8),
xi. stockage du produit obtenu après refroidissement.

11. Procédé de fabrication d'une barrière acoustique (7) comprenant les étapes suivantes :
i. pesage des granulés de caoutchouc styrène-butadiène (SBR) issus du recyclage de pneus en fin de vie (ELT) d'une taille comprise entre 1,0 et 4,0 mm,
ii. transfert des granulés de SBR préparés vers le mélangeur,
iii. ajout d'isocyanate comme liant, de monoéthylène glycol (MEG) comme catalyseur, de phosphate de tris(1-chloro-2-propyle) (TCPP) comme retardateur de flamme et d'eau dans un mélangeur vertical,
iv. mélange de tous les matériaux introduits dans un mélangeur vertical afin d'obtenir un mélange homogène,
v. transfert sans perdre de temps de plus de la moitié du mélange préparé dans des moules et réalisation du calibrage du mélange transféré dans les moules,
vi. placer un treillis en fibres de carbone recyclées (1), ledit treillis en fibres de carbone recyclées (1) étant un treillis rectangulaire comprenant sept tiges horizontales (6), dont deux paires de tiges horizontales (6) sont disposées respectivement sur chacun des côtés horizontaux du treillis, trois tiges horizontales (6) étant disposées entre lesdites paires de tiges horizontales (6), ainsi que six tiges verticales (5), dans les moules, puis transférer le reste du mélange préparé dans les moules, de manière à former un panneau en granulés de caoutchouc styrène-butadiène (SBR) (8),
vii. mise en place et réalisation du processus de moulage du panneau en granulés de SBR (8), compression sous pression, à une température supérieure de 133 °C et une température inférieure de 128 °C,
viii. refroidissement après le pressage,
ix. collage de la couche de mousse de polyéthylène basse densité (LDPE) (4), sans fentes, sur l'une des faces du panneau en granulés de SBR (8),
x. tissage ou collage du gazon synthétique sur la couche de mousse de LDPE (4) sans fentes, puis découpage de fentes de 2 à 5 mm de largeur,
xi. collage d'une couche de gazon synthétique (3) sur l'autre face du panneau en granulés de SBR (8),
xii. stockage du produit obtenu après refroidissement.

12. Procédé de fabrication d'une barrière acoustique (7) comprenant les étapes suivantes :
i. pesage des granulés de caoutchouc styrène-butadiène (SBR) issus du recyclage de pneus en fin de vie (ELT) d'une taille comprise entre 1,0 et 4,0 mm,
ii. transfert des granulés de SBR préparés vers le mélangeur,
iii. ajout d'isocyanate comme liant, de monoéthylène glycol (MEG) comme catalyseur, de phosphate de tris(1-chloro-2-propyle) (TCPP) comme retardateur de flamme et d'eau dans un mélangeur vertical,
iv. mélange de tous les matériaux introduits dans un mélangeur vertical afin d'obtenir un mélange homogène,
v. transfert sans perdre de temps de plus de la moitié du mélange préparé dans des moules et réalisation du calibrage du mélange transféré dans les moules,
vi. placer un treillis en fibres de carbone recyclées (1), ledit treillis en fibres de carbone recyclées (1) étant un treillis rectangulaire comprenant sept tiges horizontales (6), dont deux paires de tiges horizontales (6) sont disposées respectivement sur chacun des côtés horizontaux du treillis, trois tiges horizontales (6) étant disposées entre lesdites paires de tiges horizontales (6), ainsi que six tiges verticales (5), dans les moules, puis transférer le reste du mélange préparé dans les moules, de manière à former un panneau en granulés de caoutchouc styrène-butadiène (SBR) (8),
vii. mise en place et réalisation du processus de moulage du panneau en granulés de SBR (8), par compression, à une température supérieure de 133 °C et une température inférieure de 128 °C,
viii. refroidissement après le pressage,
ix. collage d'une couche de mousse en polyéthylène basse densité (PEBD) (4) sans fentes sur un côté du panneau en granulés de caoutchouc styrène-butadiène (SBR) (8), puis découpe de fentes d'une largeur de 2 à 5 mm,
x. collage d'une couche de gazon synthétique (3) sur l'autre face du panneau en granulés de SBR (8),
xi. stockage du produit obtenu après refroidissement.

13. Procédé de fabrication de la barrière acoustique (7) selon la revendication 10, **caractérisé en ce qu'**il comprend les étapes suivantes;
i. pesage de 84,331 à 84,642 % en masse de granulés de caoutchouc styrène-butadiène (SBR) issus du recyclage de pneus en fin de vie (ELT) d'une taille comprise entre 1,0 et 4,0 mm,
ii. transfert des granulés de SBR préparés dans le mélangeur,
iii. ajout dans un mélangeur vertical, en masse de 4,392 à 4,487 % d'isocyanate en tant que liant, de 0,02201 à 0,02715 % de monoéthylène glycol (MEG) en tant que catalyseur, de 0,728 à 0,767 % de tris(1-chloro-2-propyl) phosphate (TCPP) en tant qu'agent ignifuge, et de 0,169 à 0,176 % d'eau,
iv. mélange de tous les matériaux introduits dans un mélangeur vertical afin d'obtenir un mélange homogène,
v. transfert sans perdre de temps 60 % du mélange préparé dans des moules et réalisation du calibrage du mélange transféré dans les moules,
vi. placer 5,223 à 5,334 % de treillis en fibres de carbone recyclées (1), ledit treillis en fibres de carbone recyclées (1) étant un treillis rectangulaire comprenant sept tiges horizontales (6), dont deux paires de tiges horizontales (6) sont disposées respectivement sur chacun des côtés horizontaux du treillis, trois tiges horizontales (6) étant disposées entre lesdites paires de tiges horizontales (6), ainsi que six tiges verticales (5), dans les moules, puis transférer 40% du reste du mélange préparé dans les moules, de manière à former un panneau en granulés de caoutchouc styrène-butadiène (SBR) (8),
vii. mise en place en 1 minute et réalisation du processus de moulage du panneau en granulés de SBR (8), par compression pendant 20 minutes à une pression de 200 bars, avec une température supérieure de 133 °C et une température inférieure de 128 °C,
viii. refroidissement pendant une demi-journée après le pressage,
ix. collage de 1,454 à 1,507 % de la couche de mousse de polyéthylène basse densité (PEBD) (4), sans fentes, en masse, sur une face du panneau en granulés de SBR (8), et découpe de fentes de 2 à 5 mm de largeur,
x. collage de 1,230 à 1,236 % de la couche de gazon synthétique (3), en masse, sur l'autre face du panneau en SBR (8),
xi. stockage du produit obtenu après refroidissement.

14. Procédé de fabrication de la barrière acoustique (7) selon la revendication 10, **caractérisé en ce qu'**il comprend les étapes suivantes;
i. pesage de 84,331 à 84,642 % en masse de granulés de caoutchouc styrène-butadiène (SBR), obtenues par le recyclage de pneus en fin de vie (ELT) de 1,0 à 4,0 mm,
ii. transfert des granulés de SBR préparés dans le mélangeur,
iii. ajout dans un mélangeur vertical, en masse de 4,392 à 4,487 % d'isocyanate en tant que liant, de 0,02201 à 0,02715 % de monoéthylène glycol (MEG) en tant que catalyseur, de 0,728 à 0,767 % de tris(1-chloro-2-propyl) phosphate (TCPP) en tant qu'agent ignifuge, et de 0,169 à 0,176 % d'eau,
iv. mélange de tous les matériaux introduits dans un mélangeur vertical afin d'obtenir un mélange homogène,
v. transfert sans perdre de temps 60 % du mélange préparé dans des moules et réalisation du calibrage du mélange transféré dans les moules,
vi. placer 5,223 à 5,334 % de treillis en fibres de carbone recyclées (1), ledit treillis en fibres de carbone recyclées (1) étant un treillis rectangulaire comprenant sept tiges horizontales (6), dont deux paires de tiges horizontales (6) sont disposées respectivement sur chacun des côtés horizontaux du treillis, trois tiges horizontales (6) étant disposées entre lesdites paires de tiges horizontales (6), ainsi que six tiges verticales (5), dans les moules, puis transférer 40% du reste du mélange préparé dans les moules, de manière à former un panneau en granulés de caoutchouc styrène-butadiène (SBR) (8),
vii. mise en place en 1 minute et moulage du panneau en granulés de SBR (8), par compression pendant 20 minutes à une pression de 200 bars, avec une température supérieure de 133 °C et une température inférieure de 128 °C,
viii. refroidissement pendant une demi-journée après le pressage,
ix. collage de 3,546 à 3,691 % de la couche de mousse de polyéthylène basse densité (PEBD) (4), sans fentes, en masse, sur une face du panneau en granulés de SBR (8),
x. tissage ou collage du gazon synthétique sur la couche de mousse LDPE (4) sans fentes, puis découpage de fentes de 2 à 5 mm de largeur,
xi. collage de 1,230 à 1,236 % de la couche de gazon synthétique (3), en masse, sur l'autre face du panneau en granulés de SBR (8),
xii. stockage du produit obtenu après refroidissement.

15. Procédé de fabrication de la barrière acoustique (7) selon la revendication 10, **caractérisé en ce qu'**il comprend les étapes suivantes;
i. pesage de 49,799 à 53,001 kg de granulés de caoutchouc styrène-butadiène (SBR) obtenus par le recyclage de pneus en fin de vie (ELT) de 1,0 à 4,0 mm,
ii. transfert des granulés de SBR préparés dans le mélangeur,
iii. ajout dans un mélangeur vertical, de 2,650 à 2,750 kg d'isocyanate en tant que liant, de 0,013 à 0,017 kg de monoéthylène glycol (MEG) en tant que catalyseur, de 0,430 à 0,480 kg de tris(1-chloro-2-propyl) phosphate (TCPP) en tant qu'agent ignifuge, et de 0,100 à 0,110 kg d'eau,
iv. mélange de tous les matériaux introduits dans un mélangeur vertical afin d'obtenir un mélange homogène,
v. transfert sans perdre de temps 60 % du mélange préparé dans des moules et réalisation du calibrage du mélange transféré dans les moules,
vi. placer dans des moules de 3,150 à 3,271 kg de treillis en fibres de carbone recyclées (1), ledit treillis en fibres de carbone recyclées (1) étant un treillis rectangulaire comprenant sept tiges horizontales (6), dont des paires de tiges horizontales (6) sont disposées sur chacun des côtés horizontaux du treillis, trois tiges horizontales (6) étant disposées entre lesdites paires de tiges horizontales (6), ainsi que six tiges verticales (5), puis transférer les 40 % restants du mélange préparé dans les moules, de manière à former un panneau en granulés de caoutchouc styrène-butadiène (SBR) (8),
vii. mise en place en 1 minute et réalisation du processus de moulage du panneau en granulés de SBR (8), par compression pendant 20 minutes à une pression de 200 bars, avec une température supérieure de 133 °C et une température inférieure de 128 °C,
viii. refroidissement pendant une demi-journée après le pressage,
ix. collage d'une couche de mousse de polyéthylène basse densité (PEBD) (4) d'un poids compris entre 0,890 et 0,910 kg, sans fentes, sur l'une des faces du panneau en granulés de SBR (8), et découpe de fentes de 2 à 5 mm de largeur,
x. collage de 0,730 à 0,770 kg de la couche de gazon synthétique (3) sur l'autre face du panneau en SBR (8),
xi. stockage du produit obtenu après refroidissement.

16. Procédé de fabrication de la barrière acoustique (7) selon la revendication 10, **caractérisé en ce qu'**il comprend les étapes suivantes;
i. pesage de 49,799 à 53,001 kg de granulés de caoutchouc styrène-butadiène (SBR) obtenus par le recyclage de pneus en fin de vie (ELT) de 1,0 à 4,0 mm,
ii. transfert des granulés de SBR préparés dans le mélangeur,
iii. ajout dans un mélangeur vertical, de 2,650 à 2,750 kg d'isocyanate en tant que liant, de 0,013 à 0,017 kg de monoéthylène glycol (MEG) en tant que catalyseur en masse, de 0,430 à 0,480 kg de tris(1-chloro-2-propyl) phosphate (TCPP) en tant qu'agent ignifuge, et de 0,100 à 0,110 kg d'eau,
iv. mélange de tous les matériaux introduits dans un mélangeur vertical afin d'obtenir un mélange homogène,
v. transfert sans perdre de temps 60 % du mélange préparé dans des moules et réalisation du calibrage du mélange transféré dans les moules,
vi. placer dans des moules de 3,150 à 3,271 kg de treillis en fibres de carbone recyclées (1), ledit treillis en fibres de carbone recyclées (1) étant un treillis rectangulaire comprenant sept tiges horizontales (6), dont des paires de tiges horizontales (6) sont disposées sur chacun des côtés horizontaux du treillis, trois tiges horizontales (6) étant disposées entre lesdites paires de tiges horizontales (6), ainsi que six tiges verticales (5), puis transférer les 40 % restants du mélange préparé dans les moules, de manière à former un panneau en granulés de caoutchouc styrène-butadiène (SBR) (8),
vii. mise en place en moins de 1 minute et réalisation du processus de moulage du panneau en granulés de SBR (8), par compression pendant 20 minutes à une pression de 200 bars, avec une température supérieure de 133 °C et une température inférieure de 128 °C,
viii. refroidissement pendant une demi-journée après le pressage,
ix. collage d'une couche de mousse de polyéthylène basse densité (PEBD) (4) de 2,180 à 2,220 kg, sans fentes, sur l'une des faces du panneau en granulés de SBR (8),
x. tissage ou collage du gazon synthétique sur la couche de mousse LDPE (4) et découpage des fentes de 2 à 5 mm de largeur,
xi. collage de 0,730 à 0,770 kg de la couche de gazon synthétique (3) sur l'autre face du panneau en granulés de SBR (8),
xii. stockage du produit obtenu après refroidissement.

17. Procédé de fabrication de la barrière acoustique (7) selon la revendication 10, **caractérisé en ce qu'**il comprend les étapes suivantes;
i. pesage de 53,001 kg de granulés de caoutchouc styrène-butadiène (SBR), obtenus par le recyclage de pneus en fin de vie (ELT) de 1,0 à 4,0 mm,
ii. transfert des granulés de SBR préparés dans le mélangeur,
iii. ajout dans un mélangeur vertical, de 2,750 kg d'isocyanate en tant que liant, de 0,017 kg de monoéthylène glycol (MEG) en tant que catalyseur, de 0,480 kg de tris(1-chloro-2-propyl) phosphate (TCPP) en tant qu'agent ignifuge, et de 0,110 kg d'eau,
iv. mélange de tous les matériaux introduits dans un mélangeur vertical afin d'obtenir un mélange homogène,
v. transfert sans perdre de temps 60 % du mélange préparé dans des moules et réalisation du calibrage du mélange transféré dans les moules,
vi. placer dans des moules 3,271 kg de treillis en fibres de carbone recyclées (1), ledit treillis en fibres de carbone recyclées (1) étant un treillis rectangulaire comprenant sept tiges horizontales (6), dont des paires de tiges horizontales (6) sont disposées sur chacun des côtés horizontaux du treillis, trois tiges horizontales (6) étant disposées entre lesdites paires de tiges horizontales (6), ainsi que six tiges verticales (5), puis transférer les 40 % restants du mélange préparé dans les moules, de manière à former un panneau en granulés de caoutchouc styrène-butadiène (SBR) (8),
vii. mise en place en moins de 1 minute et réalisation du processus de moulage du panneau en granulés de SBR (8), par compression pendant 20 minutes à une pression de 200 bars, avec une température supérieure de 133 °C et une température inférieure de 128 °C,
viii. refroidissement pendant une demi-journée après le pressage,
ix. collage de 0,910 kg de couche de mousse en polyéthylène basse densité (PEBD) (4) sans fentes sur un côté du panneau en granulés de SBR (8), puis découpage des fentes de 2 à 5 mm de largeur,
x. collage de 0,770 kg de couche de gazon synthétique (3) sur l'autre côté du panneau en granulés de SBR (8).
xi. stockage du produit obtenu après refroidissement.

18. Procédé de fabrication de la barrière acoustique (7) selon la revendication 10, **caractérisé en ce qu'**il comprend les étapes suivantes;
i. pesage de 53,001 kg de granulés de caoutchouc styrène-butadiène (SBR), obtenus par le recyclage de pneus en fin de vie (ELT) de 1,0 à 4,0 mm,
ii. transfert des granulés de SBR préparés dans le mélangeur,
iii. ajout dans un mélangeur vertical, de 2,750 kg d'isocyanate en tant que liant, de 0,017 kg de monoéthylène glycol (MEG) en tant que catalyseur en masse, de 0,480 kg de tris(1-chloro-2-propyl) phosphate (TCPP) en tant qu'agent ignifuge, et de 0,110 kg d'eau.
iv. mélange de tous les matériaux introduits dans un mélangeur vertical afin d'obtenir un mélange homogène,
v. transfert sans perdre de temps de 60 % du mélange préparé dans des moules et réalisation du calibrage du mélange transféré dans les moules,
vi. placer dans des moules 3,271 kg de treillis en fibres de carbone recyclées (1), ledit treillis en fibres de carbone recyclées (1) étant un treillis rectangulaire comprenant sept tiges horizontales (6), dont des paires de tiges horizontales (6) sont disposées sur chacun des côtés horizontaux du treillis, trois tiges horizontales (6) étant disposées entre lesdites paires de tiges horizontales (6), ainsi que six tiges verticales (5), puis transférer les 40 % restants du mélange préparé dans les moules, de manière à former un panneau en granulés de caoutchouc styrène-butadiène (SBR) (8),
vii. mise en place en moins de 1 minute et réalisation du processus de moulage du panneau en granulés de SBR (8), par compression pendant 20 minutes à une pression de 200 bars, avec une température supérieure de 133 °C et une température inférieure de 128 °C,
viii. refroidissement pendant une demi-journée après le pressage,
ix. collage de 2,220 kg de couche de mousse en polyéthylène basse densité (PEBD) (4) sans fentes sur une face du panneau en granulés de SBR (8),
x. tissage ou collage du gazon synthétique sur la couche de mousse LDPE (4) et découpage des fentes de 2 à 5 mm de largeur,
xi. collage de 0,770 kg de couche de gazon synthétique (3) sur l'autre face du panneau en granulés de SBR (8),
xii. stockage du produit obtenu après refroidissement.

19. Barrière acoustique (7) obtenue par le procédé de fabrication selon l'une quelconque des revendications 10 à 18.

20. Barrière acoustique (7) selon la revendication 19, **caractérisée en ce que** la barrière acoustique (7) présente une longueur comprise entre 200 et 500 cm, une hauteur de 100 cm ou de 50 cm, et une largeur de 8 cm.
